# EUROPÄISCHE PATENTSCHRIFT

(11) **EP 1 572 402 B1**
(45) Veröffentlichungstag und Bekanntmachung des Hinweises auf die Patenterteilung: **25.04.2007**
(21) Anmeldenummer: 03799447.2
(22) Anmeldetag: 18.12.2003
(51) Int. Cl.: B22F 5/10

(54) **SINTERROHLINGE MIT GEWENDELTEN KÜHLKANÄLEN**
COILED COOLING CHANNELS
CANAUX DE REFROIDISSEMENT HELICOIDAUX

(30) Priorität: 19.12.2002 DE 10259779; 20.12.2002 DE 10260136
(43) Veröffentlichungstag der Anmeldung: 14.09.2005
(73) Patentinhaber: Gühring, Jörg, Dr., 72458 Albstadt (DE)
(72) Erfinder: KAROS, Horst, 95448 Bayreuth (DE)
(86) Internationale Anmeldenummer: PCT/DE2003/004272
(87) Internationale Veröffentlichungsnummer: WO 2004/056513

(56) Entgegenhaltungen:
- DE-A- 4 242 336
- US-A- 4 704 055
- US-A- 5 438 858
- PATENT ABSTRACTS OF JAPAN Bd. 0121, Nr. 13 (M-683), 9. April 1988 (1988-04-09) & JP 62 240701 A (TOSHIBA TUNGALOY CO LTD), 21. Oktober 1987 (1987-10-21)
- PATENT ABSTRACTS OF JAPAN Bd. 0123, Nr. 52 (M-744), 21. September 1988 (1988-09-21) & JP 63 109908 A (DAIJIETSUTO KOGYO KK), 14. Mai 1988 (1988-05-14)

## Beschreibung

Die Erfindung betrifft ein Strangpressverfahren, insbesondere zur Herstellung eines Sintermetall- oder Keramik-Rohlings für ein Werkzeug oder ein Werkzeugteil, bei dem die den Rohling bildende, plastische Masse aus einem Düsenmundstück herausgepresst wird, wobei sie entlang der Achse zumindest eines wendelförmig verdrillten, an einem Düsendorn gehaltene Stiftes strömt. Ferner betrifft die Erfindung einen mit diesem Strangpressverfahren herstellbaren Strangpressgrünling bzw. Sinterrohling sowie ein aus dem Sinterrohling herstellbares Zerspanungswerkzeug und ein Bauteil eines solchen Werkzeugs.

Aus einer plastifizierten keramischen oder pulvermetallurgischen Masse kontinuierlich, beispielsweise im Strangpressverfahren hergestellte zylindrische Sinterrohlinge mit innenliegenden, zumindest abschnittsweise wendelförmig verlaufenden Kanälen vorbestimmten Querschnitts werden in zunehmendem Maße beispielsweise in der Werkzeugindustrie, und hier insbesondere bei der Herstellung von Bohrwerkzeugen benötigt, die eine innenliegende Kühl- bzw. Spülmittelversorgung haben, so dass das Kühl- bzw. Spülmittel in unmittelbarer Schneidennähe aus dem Werkzeug austreten kann. Der wendelförmige Verlauf des zumindest einen, innenliegenden Kühlkanals ist dann erforderlich, wenn an dem herzustellenden Werkzeug, wie z. B. an einem Bohrwerkzeug wendelförmige Spannuten vorgesehen, beispielsweise eingeschliffen sind.

Solche Hochleistungswerkzeuge werden auch den hohen Belastungen gerecht, die beispielsweise bei der Hartbearbeitung, Trockenbearbeitung, Mindermengenschmierung (MMS) und der Hochgeschwindigkeitsbearbeitung (HSC) auftreten. Auch hat man erkannt, dass die Zielsetzungen MMS-Fähigkeit und deutlich höhere Schnittleistung nicht gegenläufig sind, sondern gleichzeitig realisiert werden können. Bohrwerkzeuge, die für den Einsatz mit MMS entwickelt wurden, laufen beispielsweise mit deutlich höheren Vorschüben als Werkzeuge für konventionelle Kühlschmierung. Dabei kommt der zugeführten Kühlmittelmenge eine entscheidende Rolle zu. In sogenannten High-Performance-Cutting (HPC)-Verfahren wird heute versucht unter Berücksichtigung aller beteiligten Prozessparameter die Fertigungskosten weiter zu senken. Für Werkzeuge sind neben deren Herstellungskosten hauptsächlich die Hauptzeiten und Standzeiten ausschlaggebend, die wiederum entscheidend von den fahrbaren Vorschubgeschwindigkeit abhängen und somit von den bei existierenden Werkzeugmaschinen/ Hochleistungsspindeln erzeugbaren Drehzahlen. Dabei ist die Vorschubgeschwindigkeit nicht nur von der Drehzahl begrenzt, sondern auch dadurch, dass darauf zu achten ist, dass bei der Spanabfuhr kein Spänestau entsteht. Im Gegensatz zu gerade genuteten Werkzeugen haben gewendelte Werkzeug dabei entscheidende Vorteile. Denn die gewendelte Bauform erlaubt aufgrund des günstigeren Spanwinkels eine höhere Schneidleistung und aufgrund des Drallwinkels der Spannut einen erleichterten Abtransport des Gemisches aus Spänen und Schmiermittel. Auch hinsichtlich Zentriergenauigkeit sind gewendelte Werkzeuge vorteilhaft, da sich diese Werkzeuge über ihren gesamten Außenumfang in der Bohrung abstützen können.

Dabei ist nicht nur die axiale Länge solcher Bohrwerkzeuge zwischenzeitlich erheblich gesteigert worden. Neueste Entwicklungen gehen zunehmend dazu über, auch sehr kleine Zerspanungswerkzeuge, insbesondere Bohrer, mit Innenkühlkanälen auszustatten, wobei dabei im Hinblick auf die Stabilität des Bohrers ein besonderer Augenmerk auf die dabei besonders dünnen Wanddicken zwischen Kühhlkanälen und Spannuten gelegt werden muss. Es kommt daher in besonderem Maße darauf an, die Steigung des zumindest einen, innenliegenden wendelförmigen Kühlkanals bei der Herstellung genau zu steuern und zu kontrollieren, damit die Lage des Kühlkanals in den Bohrer- bzw. Werkzeugstegen über die gesamte Länge des Schneidteils im Bereich vorbestimmter, enger Toleranzen liegt.

Um die Späne aus der Spannut herauszutransportieren muss, insbesondere beim Tieflochbohren, das Kühlmittel teilweise unter hohem Druck zugeleitet werden, wobei der Innenkühlkanal bzw. der Bohrer entsprechende Drücke zerstörungsfrei ertragen muss. Dabei ist man gerade im Zuge der sich verbreitenden Mindermengenschmierung bestrebt, die Kühlkanäle möglichst großvolumig auszulegen. Zudem besteht ein Bedarf, immer kleinere und längere Bohrlöcher erstellen zu können. Mit zunehmender Länge und abnehmenden Durchmesser des Bohrwerkzeugs wird es aber immer schwieriger, die Innenkühlkanäle so zu dimensionieren, dass ein entsprechender Kühlmitteldurchsatz bzw. Kühlmitteldruck bereitgestellt wird, ohne dass die Stabilität des Bohrers leidet. Denn die Größe der Kühlkanäle ist begrenzt durch den Abstand zu Bohrerrücken bzw. Spanraum. Bei zu dünnen Stegen kommt es zu Rissen und Werkzeugbrüchen. Bei Mehrschneidigen Einsatzwerkzeugen müssen die Kühlkanäle außerdem einen gewissen Mindestabstand zueinander haben, da ansonsten Beeinträchtigungen der Bohrerstirngeometrie, d.h. z.B. der Querschneide oder einer Ausspitzung hervorgerufen werden. Zudem stößt man an verfahrensbedingte Grenzen, da mit gängigen pulvermetallurgischen Verfahren keine für derartige Werkzeuge geeigneten Rohlinge herstellbar sind.

So kann der Verlauf der innenliegenden Kühlkanäle bei einer am ausgesinterten Rohling erfolgenden, spanenden Bearbeitung nicht überwacht werden. Es ist es daher erforderlich, den Rohling so herzustellen, dass im Bereich des Innenkanals möglichst geringe Toleranzen hinsichtlich Querschnitt, Teilkreisdurchmesser und Exzentrizität des Teilkreises zur Achse auftreten, und zwar in jedem Radialschnitt des Rohlings, was ferner die genaue Einhaltung einer vorbestimmten Wendelsteigung voraussetzt.

Andernfalls kann der Fall eintreten, dass insbesondere beim Einschleifen von Spannuten in längere gesinterte Rohlinge die Nut dem Innenkanal zu nahe kommt, was entweder zu Festigkeitseinbußen oder aber dazu führt, dass der gesamte Rohling nicht mehr brauchbar ist. Dieses Problem tritt unabhängig davon auf, wieviel innenliegende Kühl- bzw. Spülmittelkanäle im Bohrer ausgebildet werden und welche Formgebung diese Kanäle haben, wobei als weiterer Gesichtspunkt bei der Herstellung von metallischen oder keramischen Rohlingen zu berücksichtigen ist, dass die Rohlinge in der Trocknungs- und/oder Sinterphase teilweise erheblichen Schrumpfungen unterliegen, die regelmäßig gefügeabhängig ablaufen. Es kommt deshalb darauf an, bei der Extrusion der plastifizierten Hartmetall- oder Keramikmasse Maßnahmen zu ergreifen, die sicherstellen, dass der extrudierte Rohling nicht nur mit großer Maßgenauigkeit, sondern auch mit einem Höchstmaß an Homogenität des Gefüges über den Querschnitt herstellbar ist.

Bekannte Verfahren werden diesen Anforderungen nur ungenügend gerecht. So wird bereits in der US-PS 2 422 994 ein Strangpressverfahren beschrieben, bei dem eine plastifizierte pulvermetallurgische Masse durch eine Strangpressdüse gepresst wird, deren Innenoberfläche Vorsprünge in Form des Spannutenquerschnitts aufweisen. Im Bereich des Zentrums der Strangpressdüse erstrecken sich in axialer Richtung geradlinige, stabförmige Körper, die an einem vor der Strangpressdüse liegenden, von der plastifizierten Masse umströmten Dorn befestigt sind. Dieses Verfahren arbeitet mehrstufig, indem das plastifizierte Rohmaterial zunächst in einen Bohrerrohling geformt wird, der zumindest eine geradlinig verlaufende, außenliegende Nut aufweist, die der Form des Spannutquerschnitts entspricht, und zumindest einen geradlinigen Stab, der der Form des Kühlkanalquerschnitts entspricht. In einem zweiten Schritt wird der so gestaltete Grünlinge durch eine Relativ-Drehbewegung zwischen der Strangpressdüse und dem Rohmaterial verdrillt. Dabei wird ein Rohling in Form einer spiralförmig gewendelten Helix mit eingeprägtem Innenkanal erzeugt. An moderne Zerspanungswerkzeuge wird jedoch die Anforderung gestellt, dass der Werkzeugschaft bis auf eingeprägte Innenkühlkanäle aus vollzylindrischen Material besteht, da nur so die vollständige Einleitung des Kühlmittels in den oder die Kühlmittelkanäle sichergestellt ist. Der aus dem spiralförmig gewendelten Helixrohling erzeugte Schneidteil muss also an einen separaten vollzylindrischen Schaft gelötet werden, wodurch sich - abgesehen von den erhöhten Herstellungskosten - auch eine geringere Stabilität des Werkzeugs ergibt. Zudem hat es sich gezeigt, daß ein solcher, zweistufiger Formgebungsprozess für die meisten der zwischenzeitlich verwendeten Rohmassen schon deshalb nicht in Frage kommt, weil der aus der Strangpressdüse austretende Rohling regelmäßig derart druckempfindlich ist, daß selbst kleinste, auf ihn einwirkende Kräfte zu unerwünscht großen Verformungen nicht nur der Außenkontur, sondern auch der innenliegenden, eingeformten Kanäle führt, wodurch die Ausschußrate übermäßig ansteigt.

Es sind zwischenzeitlich bereits vielfache Versuche unternommen worden, ein wirtschaftliches Strangpressverfahren zu finden, mit dem vollzylindrische, stabförmige Rohlinge hergestellt werden können, die eine Herstellung von einstückigen Werkzeugen mit nachträglich eingearbeiteten Spannuten erlauben.

In der DE-PS 36 01 385 wird dazu bereits ein Verfahren zur Herstellung eines Bohrwerkzeugs mit mindestens einem, wendelförmig verlaufenden, innenliegenden Kühlmittelkanal vorgestellt, bei dem der wendelförmige Verlauf des zumindest einen innenliegenden Kühlmittelkanals gleichzeitig mit der Extrusion der plastischen Masse erzeugt wird. Zu diesem Zweck ist das Düsenmundstück innenseitig mit einem wendelförmigen Profil ausgestattet, wobei die Wendelsteigung dieser Vorsprünge an die anzustrebende Wendelsteigung der innenliegenden Kühlkanäle angepaßt ist. Im Zentrum der Strangpressdüse sind elastische Stifte vorgesehen, die mit ihren stromaufwärtigen Enden an einem Düsendorn befestigt sind und deren Elastizität so groß gewählt ist, dass die Stifte der durch die Innenkontur des Düsenmundstücks induzierten Drallströmung folgen können. Abgesehen davon, dass bei dieser Art der Herstellung eine verhältnismäßig große Energiemenge aufgebracht werden muß, um dem gesamten Strömungsquerschnitt eine homogene Drallströmung aufzuprägen, hat sich gezeigt, dass bei den nach diesem bekannten Verfahren hergestellten Rohlingen die Steigung der Kühlkanalwendel häufig von der Wendelsteigung der Vorsprünge oder Vertiefungen an der Innenoberfläche des Düsenmundstücks abweicht. Dies hat zur Folge, dass die Vorsprünge oder Vertiefungen an der Innenoberfläche des Düsenmundstücks in großer Zahl, dafür aber mit verhältnismäßig kleiner Tiefe ausgebildet werden mußten, um die Materialverluste möglichst klein zu halten. Die fertig gesinterten Teile werden dementsprechend regelmäßig außen zunächst rund geschliffen, bevor die Spannut eingebracht wird.

Um den Verfahrensschritt des außen rund Schleifens der fertig gesinterten Schneidteil-Rohlinge einzusparen, wird in der DE-OS 40 21 383 bzw. in der EP 0 465 946 A1 ein Verfahren vorgeschlagen, bei dem die Innenoberfläche des Düsenmundstücks von der Mantelfläche eines Kreiszylinders gebildet ist. Dem Düsenmundstück ist dabei eine innerhalb des Massestroms liegende Dralleinrichtung vorgeschaltet. Gemäß einer Alternative wird der Strangpressmasse mittels dieser Dralleinrichtung eine gleichmäßig über den Querschnitt des Strangs wirkende Drallbewegung aufgezwungen, während gemäß der zweiten Alternative der Dralleinrichtung durch die Strangpressmasse eine Drall- bzw. Drehbewegung aufgezwungen wird. Zur Bildung der Innenkanäle ragt in den Massestrom der Drall- bzw. Drehbewegung folgendes, fadenförmiges Material hinein. In diesem Fall wird der Kreisdurchmesser, auf dem die Querschnitte bzw. der Querschnitt des zumindest einen innenliegenden Kühlmittelkanals beim extrudierten Rohling zu liegen kommt, durch die Strömungsgeschwindigkeit und durch die Reibungsverluste im Düsenmundstück beeinflußt, was sich insbesondere beim Wechseln der Strangpressmasse von einer Charge zur anderen negativ auswirken kann. Es wird deshalb gemäß einer weiteren Variante dieses Verfahrens vorgeschlagen, das Düsenmundstück drehbar auszubilden, wobei durch die Drehbewegung des Düsenmundstücks eine Korrektur der Drallbewegung des Massestroms erfolgen soll. Da die Erfassung der nötigen Korrektur aber erst in einem der Düse nachgeordneten Bereich erfolgen kann, können Totzeitungenauigkeiten aber nicht vermieden werden. Auch eine entgegen der Verdrallrichtung der Verdralleinrichtung wirkende Entspannungsbewegung der Strangpressmasse nach dem Austritt der Masse aus der Düse, die von den individuellen Eigenschaften der jeweiligen Massencharge abhängt, macht das Verfahren schwer beherrschbar, so dass Ungenauigkeiten bei der Lage der durch die Fäden vorgegebenen Helix der Innenkanäle nicht vermieden werden können. An den Fäden kann zudem nur im Strömungsquerschnitt rundes, kühlkanalquerschnittbildendes Material in die Strömung gehängt werden, da - falls kein im Strömungsquerschnitt rundes Material verwendet wird - nicht definierbar ist, wie das in die Strömung gehängte Material auf dem Strömungsquerschnitt zu liegen kommt.

Aus dem Dokument EP 0 431 681 A2 ist ferner ein Verfahren und eine Vorrichtung zur Herstellung eines zylindrischen, metallischen oder keramischen Rohlings der eingangs beschriebenen Gattung bekannt geworden, bei dem sich durch das Zentrum eines innenseitig glatten, kreiszylindrischen Düsenmundstücks zumindest ein verdrallter Mittelstift aus einem starren Material erstreckt. Dieser zumindest eine, verdrallte Mittelstift ist vor dem Einlaufbereich des Düsenmundstück an einem stationären Dorn befestigt. Die Stifte sind also bei diesem Verfahren wendelförmig vorgeformt und aus einem starren Material, wie z. B. aus Hartmetall oder Stahl gebildet. Bei einem bestimmten, verhältnismäßig kleinen Verhältnis zwischen Innendurchmesser des Düsenmundstücks und Außendurchmesser des zumindest einen Mittelstifts ist es möglich, auf zusätzliche Verdralleinrichtungen zu verzichten. Dabei wird approximiert, dass die starren Mittelstifte in der Lage sind, dem Massenstrom über den gesamten Querschnitt eine gleichmäßige Drallbewegung aufzuzwingen. Bei größeren Werten des vorstehend angesprochenen Verhältnisses muß die Verdrallung des Rohlings durch zusätzliche leitschaufelartige Drallhilfen in der Düse verstärkt werden, die der Strömung eine Drallrichtung aufzwingen. Auch hat sich gezeigt, dass es regelmäßig erforderlich ist, die Mittelstifte stärker zu verdrallen als den Drall der im Rohling dann tatsächlich vorliegenden, wendelförmigen Kanäle. Dies setzt für jede Strangpressmasse umfangreiche Versuche voraus, die das Herstellungsverfahren verteuern und aufwendige Qualitäts-Sicherungsmaßnahmen erforderlich machen.

Um Strangpressrohlinge mit genau definiertem Verlauf innenliegender, wendelförmiger Kühlkanäle mit einem Höchstmaß an Reproduzierbarkeit und mit hoher Gefügequalität herzustellen, wobei keinerlei Beschränkungen hinsichtlich des Anwendungsbereichs des Verfahrens im Hinblick auf die Zusammensetzung der Strangpressmasse, der Verfahrensparameter oder hinsichtlich der Geometrie des Rohlings bestehen sollen, wurde darüber hinaus im eigenen Patent DE 42 11 827 vorgeschlagen, die Innenkanäle ohne plastische Umformung der im Düsenmundstück befindlichen Masse im Urformprozess herzustellen, wobei vorzugsweise die Masse im Wesentlichen drallfrei in das Düsenmundstück eintritt, über den gesamten Strömungsquerschnitt im Wesentlichen drallfrei entweder den zumindest einen Stift anströmt und diesen beim Durchtreten durch das Düsenmundstück in eine kontinuierliche, der Steigung seiner Wendel entsprechende Drehbewegung versetzt, oder an einer Stiftaufhängung vorbeiströmt, die in Abhängigkeit von der Strömungsgeschwindigkeit antreibbar ist.

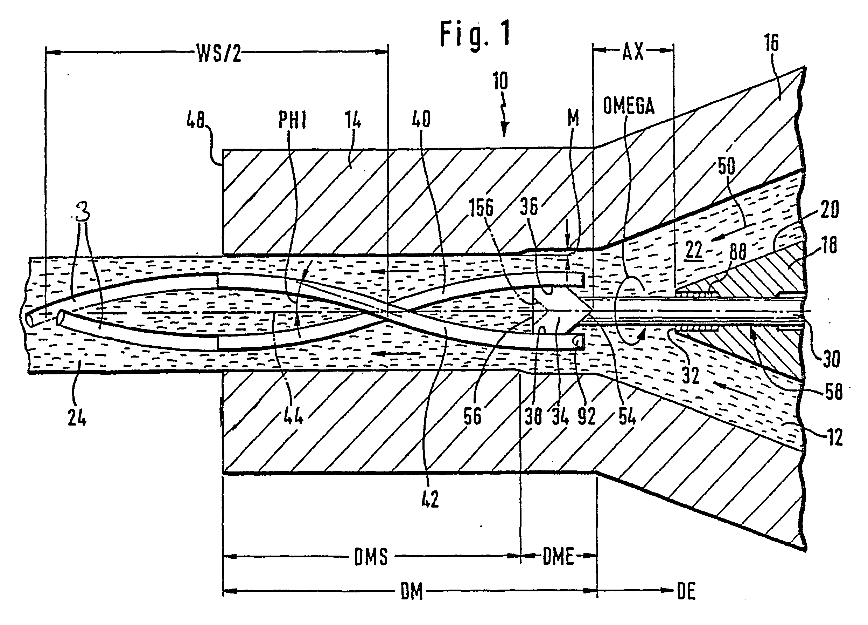

Die Vorrichtung ist dabei nach einer Variante dadurch gekennzeichnet, dass der zumindest eine Stift dreh- und axialfest mit einer im Düsendorn um eine zur Düsenachse parallele Achse drehbar gelagerten Welle verbunden und derart verdrillt ist, dass ihm die entlang seiner Achse strömende plastische Masse im Wesentlichen über die gesamte Länge einen konstanten, durch die Steigung seiner Wendel definierten Drehimpuls aufprägt. Der zugehörige Strangpresskopf ist in Figur 1 gezeigt, auf die bereits hier Bezug genommen wird:

Nach einer weiteren Variante hat die den zumindest einen Stift tragende Welle, deren radial innerhalb des Stiftes liegende Verbindungsstelle zum Stift im Düsenmund liegt, einen Zusatzantrieb, wobei in diesem Fall der Stift flexibel sein kann und der Antrieb in Unabhängigkeit von der gewünschten Steigung steuerbar ist. Gemäß einer im Zusatzpatent DE 42 42 336 gezeigten Weiterbildung wird dabei der von der Strangpressmasse umströmte Stift zusätzlich von einem reibungssenkenden Fluid angeströmt.

Hierbei löst man sich grundsätzlich von dem Gedanken, dem hochviskosen Massestrom bei der Extrusion eine der zu erzeugenden Wendelsteigung entsprechende Drallbewegung aufzuprägen und dabei die Masse verhältnismäßig stark plastisch zu verformen. Das Verfahren funktioniert auf der Umkehr eines Korkenzieher-Effekts, wobei die Korkenzieherwendel mit dem umströmten Stift und der Korken mit der plastischen Strangpressmasse zu vergleichen ist. Die zumindest eine Innenwendel entsteht dabei im Urformverfahren. Dabei wurde eine hohe Genauigkeit des Kühlkanals, und zwar hinsichtlich Steigung, radialer Lage, Winkellage und Querschnitt erreicht. Dabei wurde prinzipiell schon die Möglichkeit erwähnt, zylindrische Strangpresskörper mit wendelförmigen Kühlkanälen herzustellen, die eine von der Kreisform abweichende Querschnittsform, beispielsweise Rechteck-, Polygon- oder Ellipsenform aufweisen.

Es hat sich aber gezeigt, dass dieses Verfahren besonders bei kleinen Nenndurchmessern und bei im Verhältnis zum Nenndurchmesser großen Kühlkanalquerschnittsflächen nicht zum Erfolg führt, da die Energie der Strömung der Strangpressmasse in diesem Fall nicht ausreicht, um den oder die starren Stifte in eine Drehbewegung zu versetzen und somit entsprechend verwendelte Kühlkanäle in die ausgeschobenen Grünlinge einzuprägen. Es kann im Gegenteil zu einem Geradebiegen der gewendelten Stifte kommen.

Aufgabe der Erfindung ist es deshalb, das obenstehende Verfahren derart weiterzubilden, dass vollzylindrische Sinterrohlinge mit eingeprägten wendelförmigen Kühlkanälen auch bei schwierig zu erstellenden Kühlkanalgeometrien mit hoher Genauigkeit herstellbar sind, sowie einen Sinterrohling, ein daraus herstellbares Zerspanungswerkzeug und ein Bauteil eines solchen Werkzeugs zu schaffen, das den Anforderungen bei heutigen Fertigungsaufgaben gerecht wird.

Diese Aufgabe wird bezüglich des Verfahrens mit den Merkmalen des Anspruchs 1 gelöst, bezüglich des Sinterrohlings mit den Merkmalen der Ansprüche 4 und 5, bezüglich des Werkzeugs mit den Merkmalen des Anspruchs 19 und bezüglich des Bauteils mit den Merkmalen des Anspruchs 24.

Erfindungsgemäß wird ein Verfahren zur Herstellung vollzylindrischer Strangpressgrünlinge bzw. Sinterrohlinge mit zumindest einem wendelförmig eingeprägten Kanal vorgeschlagen. Solche Rohlinge werden beispielsweise bei der Herstellung von Bohrwerkzeugen benötigt. Beim erfindungsgemäßen Strangpressverfahren strömt die plastifizierte Masse im Strangpresskopf zuerst im Wesentlichen drallfrei in einen Düseneinlauf, um dann entlang der Längsachse des zumindest einen, am Düsendorn lagefest befestigten Stifts im Düsenmundstück zur Austrittsöffnung der Düse und durch diese hindurch gepresst zu werden. Das Düsenmundstück weist dabei eine kreiszylindrische, vorzugsweise im Wesentlichen glatte Oberfläche auf, so dass der entstehende Rohling eine vollzylindrische Außenkontur aufweist. Der angeströmte Stift dreht dabei nicht mit der Masse mit, sondern ragt starr in die Düse hinein. Er ist dabei bevorzugt drehfest am Düsendorn angebracht. Alternativ dazu kann zur Herstellung der erfindungsgemääßen Sinterrohlinge auch eine eventuell vorhandene Anordnung eingesetzt werden, bei der der Stift zwar drehbar am Düsendorn gelagert ist, der Stift aber aufgrund des kleinen Düsenquerschnitts oder hohen Stiftquerschnitts im Verhältnis zum Düsenquerschnitt trotzdem nicht mitdreht. Der Strömung im Düsenmundstück wird dabei einerseits durch die Steigung der Wendeln des Stiftes und andererseits durch einen sich drehenden Abschnitt der Düse eine Radialkomponente induziert.

Dadurch wird eine insgesamt helixförmige Strömung erzielt, die sich bei Abstimmung der Drehgeschwindigkeit am drehbewegten Abschnitt auf die Steigung der Wendelform des in den Düsenmund hineinragenden Stifts so vollzieht, dass die Strömung der Strangpressmasse der Wendelsteigung im Wesentlichen folgt, d.h. dass die Teilchen auf radialer Höhe des Stiftes eine dem Verlauf des Stiftes entsprechende Strömungsrichtung aufweisen, wodurch eine Biegeverformung des oder der Stifte trotz ihrer lage- und drehfesten Anordnung vermieden werden kann. Auch eine plastische Verformung der Strangpressmasse oder eine ungleichmäßige Gefügebildung oder Dichteverteilung in der Masse kann vermieden werden, da die Radialkomponente der Strömung nicht etwa durch Verdralleinrichtungen oder Umlenkeinrichtungen wie Leitschaufeln etc. aufgezwungen wird, sondern allein durch die Drehbewegung des drehbaren Abschnitts der Düse erzielt wird. Die Radialbewegung der Strömung wird somit nicht durch Umlenkung an einem der Strömung im Weg stehenden Hindernis bewirkt, sondern allein über die der Strangpressmasse inhärenten Reibungskräfte, die bewirken, dass die Masse von der Drehbewegung des Düsenabschnitts mitgenommen wird, wobei sich die so induzierte Drehbewegung von der Düsenwand ausgehend selbstständig zum Inneren der Düse hin fortpflanzt bis sich eine stationäre helixförmige Strömung einstellt, die der Steigung der Stiftwendel entspricht. Die Strömung steht dabei in einem Verhältnis zur Viskosität und Zähigkeit der Strangpressmasse.

Es kommt somit zu einem weitgehend von Verspannungen und Dichteinhomogenitäten befreiten Gefüge der Strangpressmasse, so dass nach dem Ausschub des Rohlings aus der Düse auch kein nachträgliches Aufzwirbeln wie bei einer durch eine Verdralleinrichtung aufgezwungenen Helixströmung zu befürchten ist. Mit dem erfindungsgemäßen Verfahren lassen sich somit Grünlinge mit hoher Helixgenauigkeit herstellen.

Vorteilhaft ist es dabei, wenn sich der drehangetriebene Abschnitt der Düse über den vom gewendelten Stift durchdrungenen Abschnitt erstreckt, da auf diese Weise ein Zusammenwirken zwischen Stiftwendel und Drehbewegung sichergestellt ist. Durch eine Anordnung des drehbewegten Abschnitts über einen Vorlaufbereich des Stift und über die Länge des vom Stift durchdrungenen Abschnitts des Düsenmundstücks kann bewirkt werden, dass sich die Masse schon vor Erreichen des Stiftes wendelförmig bewegt, und somit eine Verbiegung des Stiftes wirkungsvoll verhindert werden. Durch eine vorteilhafte zusätzliche Schmierung des Stiftes gemäß Anspruch 3 läßt sich die auf den Stift wirkende Last weiter verringern.

Als Material zur Erzeugung der Strangpressgrünlingen wird dabei bevorzugt Hartmetall eingesetzt, beispielsweise auf Wolframcarbidbasis, da Hartmetallwerkzeuge eine weite Verbreitung in der Fertigungstechnik gefunden haben. Die plastifizierte Masse für das Strangpressen wird dabei unter ständigem Durchwalken aus einem Hartmetallpulver unter Zusatz eines Bindemittels, beispielsweise Kobalt, und eines Plastifizierungsmittels, beispielsweise Paraffin, erzeugt. Das erfindungsgemäße Strangpressverfahren könnte aber ebensogut bei sonstigen Sinterwerkstoffen wie beispielsweise Keramik oder Cermet eingesetzt werden, bei denen die Kühlkanalquerschnittsgeometrie schon beim noch weichen Rohmaterial definiert werden kann.

Das vorgeschlagene Strangpressverfahren eignet sich zur Herstellung von Strangpressgrünlingen für drehangetriebene Zerspanungswerkzeuge, insbesondere Bohrer und Fräser, beispielsweise Fingerfräser. Daneben ist es auch zur Herstellung von Strangpressgrünlingen für Stufenwerkzeuge, beispielsweise Stufenbohrer einsetzbar.

An den Extrusionsprozess schließt sich zunächst ein Trocknungs- bzw. Vorsinterungsprozess an, bevor die entsprechend abgelenkten Rohling-Stäbe dem eigentlichen Sinterprozess unterworfen werden. Die fertig gesinterten Rohlinge werden dann regelmäßig spanend bearbeitet, indem in die Außenoberfläche der Rohlinge zumindest eine wendelförmige Spannut eingeschliffen wird.

Aufgrund der oben dargestellten Vorteile des erfindungsgemäßen Verfahrens sind auch Rohlingen mit kleinen Durchmessern und von der Kreisform abweichender Kühlkanalkontur sowie mit großen Kühlkanalquerschnittsflächen zu fertigen, bei denen bisherige Verfahren nicht zum Erfolg führen konnten, insbesondere Sinterrohlinge gemäß den Ansprüchen 4 oder 5.

Dies ist von enormer Bedeutung, da insbesondere bei kleinen Werkzeugdurchmessern die auf dem oder den Werkzeugstegen zur Verfügung stehende Fläche unter Einhaltung von nötigen Mindestwandstärken für eine optimale Kühlmittelzufuhr vollständig ausgenutzt werden muss, andererseits Verfahrensgrenzen bei gängigen Herstellungsverfahren bestanden. Hinsichtlich einer optimalen Nutzung des auf dem Steg zur Verfügung stehenden Raumes gewinnt dabei eine von der Kreisform abweichende Gestaltung der Kühlkanalkonturen an Bedeutung. Andererseits versucht man in diesem Sinne, die Wanddicken zwischen Kühlkanal und Spannut und Werkzeugaußenumfang möglichst eng zu gestalten, d.h. Sinterrohlinge mit im Verhältnis zur Rohlingquerschnittsfläche großen Kühlkanalquerschnitten herzustellen. Dabei ist die Helixgenauigkeit bzw. die Größe der Abweichung von der Soll-Helix entscheidend. Dies gilt insbesondere bei Rohlingen mit kleinen Durchmessern und mit großen Kühlkanalquerschnitten, da hier kleine Wandstärken zwischen Spannut und dem eingeformten Kühlkanal vorliegen, so dass schon kleine Abweichungen zu einer Ausschussproduktion führen.

Erfindungsgemäß ist man erstmals in der Lage, diesen Anforderungen an Sinterrohlinge zum Werkzeugbau Rechnung zu tragen.

So weisen die mit dem erfindungsgemäßen Verfahren erstmals herstellbaren Rohlinge gemäß Anspruch 5 ein Verhältnis der Rohling-Querschnittsfläche zur Querschnittsfläche des oder der eingeformten Kanäle auf, das bei einem eingeformten Kanal einen Wert von 20:80 oder besser, insbesondere 30:70, beispielsweise 50:50 beträgt, bei mehreren eingeformten Kanälen 20:80 oder besser, insbesondere 30:70, beispielsweise 40:60. "Besser" ist dabei im Sinne möglichst großer Kühlkanalquerschnitte zu verstehen.

Der erfindungsgemäße Rohling gemäß Anspruch 5 erlaubt es, Werkzeuge herzustellen, die im Vergleich zu aus herkömmlichen Sinterrohlingen hergestellten Werkzeugen überragende Kühlmitteldurchsatzmengen aufweisen. die Herstellung solcher Rohlinge wird erst durch das erfindungsgemäße Verfahren möglich. Denn aus derart großen Kühlkanalquerschnitten resultiert eine extrem dünne Mindestwandstärke zwischen Innenkühlkanalhelix und gewendelter Spannut, was das Einhalten äußerst penibler Toleranzgrenzen für die Kanalhelix voraussetzt. Mit einem Verfahren mit Zwangsverdrallung kann dies aufgrund der obenstehend beschriebenen, verfahrensinnewohnenden Probleme hinsichtlich Gefüge- Spannungs- und Dichteinhomogenitäten in der plastifizierten Masse nicht erreicht werden. Allenfalls kann dabei unter Inkaufnahme hoher Ausschußquoten auf nichtreproduzierbare Zufallstreffer gesetzt werden. Mit dem eigenen Verfahren gemäß DE 42 42 336 kann dagegen die zum Antrieb des Stiftes nötige Kraft nicht aufgebracht werden, da der Stift in dem Maße dicker und damit schwergängiger wird, wie der gewünschte Kanaldurchmesser ansteigt, während gleichzeitig die zum Antrieb des Stiftes nutzbare Masse abnimmt.

Auch Rohlinge mit einem Durchmesser kleiner 12 mm und einer von der Kreiskontur abweichenden Querschnittskontur des Kühlkanals gemäß Anspruch 4 können mit dem erfindungsgemäßen Verfahren erstmals gefertigt werden. Wie obenstehend erwähnt bieten von der Kreiskontur abweichenden Querschnittskonturen hinsichtlich der Raumausnutzung auf den Werkezeugstegen und damit hinsichtlich der Schmiermittelzufuhroptimierung erhebliche Vorteile, was besonders bei kleinen Werkzeugdurchmessern wichtig ist.

Mit dem bekannten Verfahren gemäß EP 465 946 könnten zwar auch Rohlinge mit derartig kleinen Durchmessern hergestellt werden. An den Fäden kann jedoch nur rundes, kühlkanalquerschnittbildendes Material in die Strömung gehängt werden, da - falls keine Kugeln in die Strömung gehängt werden - nicht definierbar ist, wie das in die Strömung gehängte Material auf dem Strömungsquerschnitt zu liegen kommt. Zudem sind dabei nur relativ kleine Kühlkanalquerschnitte zu erzeugen, da ansonsten beim aus dem Rohling zu erzeugenden Werkzeug die minimale Wanddicke zwischen Kühlkanal und Spannut derart klein wird, dass die mit dem Fadenverfahren einhaltbare Helixtoleranz der Kühlkanäle zu groß ist.

Versuche ergaben zudem, dass mit dem eigenen Verfahren gemäß DE 42 42 336 bei Außendurchmessern unter 12 mm bei großen Kühlkanalquerschnitten nicht mit Sicherheit die zum Antrieb des Stiftes nötige Kraft aufgebracht werden kann (s.o.), während bei kleinerer Dimensionierung der Kühlkanalquerschitte und damit der in die Strömung ragenden Stifte die auf die Stifte wirkende Kraft schnell zu einem Geradebiegen der Stifte führt.

Bei zukünftigen Materialien für die Strangpressmasse, optimierter Schmierung der Stifte gemäß DE 42 42 336 etc. kann es aber theoretisch nicht ausgeschlossen werden, dass mit dem älteren eigenen Verfahren auch noch Rohlinge mit Außendurchmessern unter 12 mm gefertigt werden könnten. Im Bereich unter 8 mm, beispielsweise unter 4 mm erscheint der Einsatz dieses Verfahrens aber ausgeschlossen.

Die erfindungsgemäßen Rohlinge eignen sich somit zur Herstellung von Werkzeugen mit gegenüber bekannten Werkzeugen erhöhter Kühlmittelzufuhr.

Die Sinterrohlinge werden dazu an ihrem Außenumfang nachgeschliffen, woraufhin die geforderte Anzahl wendelförmmiger Spannuten eingearbeitet, beispielsweise eingeschliffen oder eingefräst wird. Die entstehenden Werkzeuge weisen dann zumindest einen Steg auf, der von zumindest einem gewendelten Innenkühlkanal durchzogen wird, wobei die Steigung des zumindest einen Innenkühlkanals synchron zur Steigung der zumindest einen Spannut verläuft.

Das aus dem Sinterrohling gemäß Anspruch 4 hergestellte, erfindungsgemäße Werkzeuge ist dabei insbesondere zum Einsatz als Tieflochbohrwerkzeug bei Durchmesser-Längen-Verhältnissen über 1:5 und hier insbesondere zum Tieflochbohren von Stahl geeignet, bei denen bisher trotz schlechterer Spanabfuhr aufgrund des Seitenspanwinkels von 0° und schlechterer Zentriergenauigkeit (aufgrund der einseitig auf Seiten des Werkzeugsteges erfolgenden Abstützung im Bohrloch) mit geradegenuteten Spannuten gearbeitet werden mußte, da bei von der Kreisform abweichenden Kühlkanalkonturen und kleineren Werkzeugdurchmessern als 12 mm, insbesondere kleiner 8 mm, beispielsweise kleiner 4 mm gewendelte Werkzeuge nicht mit der für Höchstbelastungen erforderlichen Genauigkeit hergestellt werden konnten. Gleiches gilt für Werkzeuge aus einem Sinterrohling mit den Merkmalen des Anspruchs 5.

Auch bei kürzeren Zerspanungswerkzeugen trägt die durch das erfindungsgemäße Strangpressverfahren erzielte hohe Genauigkeit hinsichtlich Lage und Fläche der Kühlkanäle auf den Werkzeugstegen dazu bei, das bei ausreichender Werkzeugfestigkeit eine optimale Schmiermittelzufuhr gesichert ist. Somit können Zerspanungsaufgaben gelöst werden, die mit heutigen Werkzeugen nicht bewältigt werden können, insbesondere hinsichtlich kleinerer Bohrungsdurchmesser, längeren Hublängen ohne Zwischenrückzug und schlecht zerspanbaren Materialien wie beispielsweise CFK-Sandwichmaterialien etc.

Mit dem erfindungsgemäßen Werkzeug kann damit dem Trend zu immer kleineren Bohrungsdurchmessern, immmer größeren Bohrhublängen, erhöhten Vorschubgeschwindigkeiten und optimiertem Kühlmitteldurchsatz entsprochen werden. Mit Tielochbohrern werden beispielsweise Bohrungen mit einem Verhältnis Bohrerlänge zu Durchmesser von bis zu 200 : 1, im Einzelfall bis zu 100-mal Durchmesser Hublänge in einem Zug und teilweise sogar ohne Vorbohren gebohrt. Solche Werkzeuge werden heute beispielsweise im Motoren- und Schiffbau, und bei der Herstellung von Kraftstoff-Einspritz-Systemen eingesetzt. Hier besteht die Anforderung, Bohrungen mit sehr kleinen Durchmessern (im Bereich von 1 mm) und dazu im Verhältnis sehr großen Bohrungslängen zu fertigen.

Bei Werkzeugen mit Durchmessern kleiner 12 mm, insbesondere kleiner 8 mm oder 4 mm ist es im Sinne einer Optimierung der Kühlkanalquerschnittsfläche und damit der genügenden Schmiermittelzufuhr zudem vorteilhaft, wenn gemäß Anspruch 6 sowohl von der Kreisform abweichende Querschnitte als auch die Kühlkanalquerschnittsflächen gemäß Anspruch 5 vorgesehen sind.

Der Spanwinkel an der Bohrerschneide wird dabei durch den Seitenspanwinkel der Bohrerwendel und damit durch den Spiralwinkel des in den Sinterrohlings eingeformten Innenkühllkanals bestimmt. Er hat entscheidenden Einfluß auf Spanbildung und die Spanabfuhr und richtet sich deshalb nach den Eigenschaften des zu bearbeitenden Werkstoffes. In der vorteilhaftenAusführungsform gemäß Anspruch 8 nimmt er dabei Werte größer 10° an.

Gemäß einer vorteilhaften Ausgestaltung nach Anspruch 21 ist das Werkzeug als Zweilippen- oder Mehrlippenwerkzeug vorgesehen. Zu ihrer Herstellung sind dabei besonders Sinterrohlinge mit Kühlkanalkonturen in Form einer Ellipse oder eines Trigons gemäß den Ansprüchen 17 und 18 sowie Mischformen gemäß den Ansprüchen 12 bis 15 geeignet, da mit diesen Formen der auf dem jeweiligen Werkzeugsteg zur Verfügung stehende Platz optimal und unter Einhaltung bestimmter Mindestwandstärken für den Kühlkanal genutzt werden kann. Unter Trigon im Sinne der Erfindung versteht man dabei eine dreieckartige Form mit leicht verrundeten Ecken mit einem Mindestradius im Bereich des 0,2-fachen des vom Dreick berührend eingeschlossenen Kreises.

Bei einer einlippigen Ausgestaltung gemäß Anspruch 22 erscheint dabei besonders eine nierenförmige Kühlkanalgestaltung gemäß Anspruch 16 geeignet. Alternativ dazu kann die Kühlmittelzufuhr durch mehrere, unter Umständen trigon- oder ellipsenförmige Kühlkanäle erfolgen.

In aufwändigen Versuchen hat sich dabei herausgestellt, dass mit einem trigonförmigen Kühlkanalquerschnitt gegenüber einem kreisrunden Kühlkanalquerschnitt zwar eine sehr gute Ausnutzung der auf dem Werkzeugsteg vorhandenen Fläche unter Einhaltung von unter Festigkeitsgesichtspunkten notwendigen Mindestabstähden zu Spannut und Außenumfang des Werkzeugs erzielt werden kann. Hinsichtlich Kühlmitteldurchsatz und Werkzeugfestigkeit haben sich aber Kühlkanalformen mit verrundeten Radien als noch günstiger erwiesen:

Dabei wurde erkannt, dass die am Kühlkanal auftretenden Spannungen von der Form des Kühlkanals abhängen und hauptsächlich aus der Kerbwirkung des Kühlkanals an dessen kleinsten Radien in Lastrichtung resultieren. Ferner wurde erkannt, dass für den Widerstand, den ein Zerspanungswerkzeug, beispielsweise ein Bohrer oder Fräser, diesen Spannungsspitzen entgegen setzen kann, d.h. für seine Stabilität und letztlich dafür, ob es zu Rissbildung oder vorzeitigem Bruch des Werkzeugs kommt, neben den am Kühlkanal auftretenden Spannungsspitzen der Abstand der Kühlkanäle zum Spanraum und damit die Lage des Kühlkanals auf dem Steg entscheidend ist.

Umfangreiche Versuche und Simulationen führten zu einer vorteilhaften Kühlkanal-Querschnittsgeometrie, d.h. Sinterrohlingen gemäß Anspruch 15 mit Mindestradien der Kühlkanalkontur im Bereich des 0,35- bis 0,9-fachen, insbesondere des 0,5- bis 0,85-fachen, bevorzugt dem 0,6 bis 0,85-fachen, besonders bevorzugt dem 0,7 bis 0,8-fachen, beispielsweise dem 0,75-fachen des Radius eines von der Kontur eingeschlossenen Kreises.

Für ein aus dem Sinterrohling hergestelltes Werkzeug erwiesen sich dabei Mindestwanddicken zwischen Innenkühlkanal und Bohreraußenumfang, zwischen Innenkühlkanal und Spanfläche und zwischen Innenkühlkanal und Spanfreifläche als günstig, die in einem Bereich zwischen einer Untergrenze und einer Obergrenze liegen, wobei die Untergrenze bei 0,08 x D für D <= 1mm und bei 0,08mm für D > 1mm liegt, insbesondere bei 0,08 x D für D <= 2,5mm und bei 0,2mm für D > 2,5mm, bevorzugt bei 0,08 x D für D <= 3,75mm und bei 0,3mm für D > 3,75mm, beispielsweise bei 0,1 x D für D <= 3mm und bei 0,3mm für D > 3mm, und wobei die Obergrenze bei 0,35 x D für D <= 6mm und bei 0,4 x D-0,30mm für D > 6mm liegt, insbesondere bei 0,2 x D, bevorzugt bei 0,15 x D für D<=4mm und bei 0,6mm für D>4mm.

Mit dieser experimentell bestimmten Kühlkanalgeometrie und Lage des Kühlkanals auf dem Steg können insbesondere in ihrem Ausmaß überraschend positive Resultate erzielt werden:

Es zeigte sich, dass beim Werkzeug mit dem Kühlkanalprofil gemäß Ansprüchen 15 und 23 hohe Durchsatzmengen unter Last dramatisch niedrigere Spannungsbelastungen als bei trigonförmigen Werkzeugen auftreten. Die entsprechend höheren Festigkeitswerte des erfindungsgemäßen Einsatzwerkzeugs wurden in Bruchversuchen bestätigt. Die Versuche wurden dabei bei Werkzeugen aus einem gängigen Hartmetall mit Werten des 0,5- bis 0,85-fachen des Radius eines von der Kontur eingeschlossenen Kreises für den engsten Krümmungsradius durchgeführt. Besonders geeignet erschienen dabei Werte des 0,6 bis 0,85-fachen, insbesondere des 0,7- bis 0,8-fachen des Durchmessers des eingeschlossenen Kreises. So ergab sich beispielsweise bei einem Bohrer mit einem Nenndurchmesser von 4mm ein Mindestradius von 0,75 x Durchmesser des eingeschlossenen Kreises auf der der Spannut zugewandten Seite des Kühlkanals ca. 35% niedrigere Spannungsspitzen bei gleicher Kühlkanalquerschnittsfläche. Dadurch konnte ein Wert von lediglich 0,3 mm für die dortige Mindestwanddicke erreicht werden, ohne eine ungenügende Bohrerfestigkeit in Kauf zu nehmen. Bei Werkzeugen aus einem anderen Material können aber sogar Werte in einem Bereich von 0,35 - 0,9 x Kreisradius sinnvoll sein. Bei Einsatz eines Materials höherer Duktilität und somit höherer Spannungs- insbesondere Zugspannungsresistenz können beispielsweise noch Mindestkrümmungsradien bis hinunter auf 0,35 x Kreisradius des eingeschlossenen Kreises vorteilhafte Ergebnisse liefern. Auch bei Werkzeugen, die besonderen Belastungszuständen ausgesetzt sind, kann eine solche Dimensionierung sinnvoll sein.

Neben den geringeren Kerbspannungen aufgrund der im Verhältnis zu herkömmlichen Trigonprofilen relativ sanften Verrundungen tritt dabei der zusätzliche Effekt auf, dass die Stelle der Kühlkanalkontur, an der die größte Krümmung anliegt, von der Stelle, an der die Wanddicke des Steges am geringsten ist, versetzt ist. Daraus folgt, dass die Wand an der höchstbelasteten Stelle relativ dick und damit bruchfest ist.

Andererseits steigen die Durchsatzmengen bei einem Einsatzwerkzeug mit der erfindungsgemäßen Kühlkanalgeometrie gegenüber einem Einsatzwerkzeug mit runder Kühlkanalgeometrie fast proportional mit der Querschnittsfläche an, wobei der Anstieg der Kerbspannungen bei steigender Querschnittsfläche im Bereich der erfindungsgemäßen Kühlkanalgeometrie im Vergleich zu dem bei herkömmlichen Trigonprofilen überraschend klein ist. Mit dem erfindungsgemäßen Kühlkanalprofil lassen sich so Querschnittsflächen realisieren, die bei rundem Profil mit gleichem Kühlmitteldurchsatz aufgrund zu niedriger Wandabstände schon zu einem Versagen des Werkzeugs führen würden.

Es ergab sich eine Zusammenhang der hinreichenden Wandstärke zum Nenndurchmesser, der sich bei kleinen Werkzeug-Durchmessern linear mit einem Anstieg der Werkzeugdurchmesser vollzieht. Als hinreichend stabil bei extrem hoher Kühlmittelzufuhr haben sich dabei im Test Wandstärken erwiesen, die oberhalb einer Untergrenze von 0,08 x D für D <= 2,5mm und bei 0,2mm für D > 2,5mm, bevorzugt bei 0,08 x D für D <= 3,75mm und bei 0,3mm für D > 3,75mm, beispielsweise bei 0,1 x D für D <= 3mm und bei 0,3mm für D > 3mm liegen, wobei D den Nenndurchmesser bezeichnet. So hatte der obenstehend erwähnte getestete Bohrer mit Nenndurchmesser 4mm beispielsweise eine Wandstärke von 0,3mm.

Schon mit derart geringen Wandstärken lassen sich aufgrund der hinsichtlich der Spannungsverteilung im Werkzeugsteg günstigen Kühlkanalkonturgestaltung hohe Werkzeugfestigkeiten und damit Standzeiten erzielen. Im Einzelfall kann es sogar ausreichend sein, Mindestwandstärken von 0,08mm für D > 1mm vorzusehen.

Andererseits wird die Mindestwandstärke nur durch die gewünschte Durchsatzmenge nach oben hin begrenzt. Hier stellten sich Werte gemäß Anspruch 23 von 0,35 x D für D <= 6mm und von 0,4 x D-0,30mm für D > 6mm, insbesondere von 0,333 x D für D <= 6mm und von 0,4 x D-0,40mm für D > 6mm, bevorzugt von 0,316 x D für D <= 6mm und von 0,4 x D-0,50mm für D > 6mm, besonders bevorzugt von 0,3 x D für D <= 6mm und von 0,4 x D-0,60mm für D > 6mm, beispielsweise von 0,2 x D oder 0,15 x D für D<=4mm und von 0,6mm für D>4mm als geeignete Höchstwerte heraus, bis zu denen eine derartige Kühlkanalkontur sinnvoll ist.

Dabei hatte es sich gezeigt, dass die Kühlkanalgeometrie gemäß Anspruch 15 insbesondere für kleinere Werkzeuge, bei denen es besonders auf eine hinsichtlich Festigkeit und Kühlmitteldurchfluss optimierte Raumausnutzung auf dem Werkzeugsteg ankommt, geeignet ist. Dieser Erkenntnis wurde durch die Obergrenzen für die Mindestwanddicken gemäß Anspruch 23 Rechnung getragen, die oberhalb eines bestimmmten Nenndurchmessers stärker ansteigen als im Bereich kleinerer Durchmesserwerte.

Insbesondere hat es sich herausgestellt, das ab Durchmessern von 6mm ein lineares Anwachsen der Kühlkanalquerschnittsflächen mit dem Nenndurchmesser nur bei einzelnen Anwendungsfällen, wie z.B. bei Tieflochbohrern, sinnvoll ist, da der Bedarf an Schmiermittel auch bei unterproportional anwachsenden Kühlkanalquerschnitten gedeckt werden kann. Selbstverständlich kann es aber auch bei größeren Durchmesserwerten sinnvoll sein, mit der Mindestwandstärke bis an die Untergrenze gemäß Anspruch 23 heranzugehen, um bei ausreichender Festigkeit eine hohe Kühlmittelzufuhr zu erreichen.

Die im Anspruch 23 angegebenen Werte für die Obergrenze der Mindestwanddicken tragen dieser Überlegung Rechnung, wobei die Gestaltung der Kühlkanalkontur insbesondere bei Mindestwandstärken im Bereich unterhalb von 0,2 x D sinnvoll ist. Speziell im Mindestwandstärkenbereich unterhalb von 0,15 x D für D <= 4mm und von 0,6mm für D > 4mm erweist sich die durch die erfindungsgemäße Formgebung und Dimensionierung der Kühlkanäle bezogen auf den zur Verfügung stehenden Bauraum erzielte Durchflussmengensteigerung bei gleichzeitiger guter Werkzeug-Festigkeit als überraschend günstig.

Es muss allerdings berücksichtigt werden, dass oft Werkzeuge unterschiedlicher Durchmesser aus Sinterrohlingen gleichen Durchmessers gefertigt werden. D.h., dass beipielsweise aus einem Rohling mit einem Rohdurchmesser von 6,2mm Werkzeuge mit Nenndurchessern von 4mm, 5mm und 6mm gefertigt werden. Bei dem 6mm-Werkzeug mit gleicher Kühlkanalgebung wie beim 4mm-Werkzeug wäre daher die Mindestwandstärke zwischen Kühlkanal und Werkzeugaußenumfang um 1mm größer. Unter diesem fertigungstechnischem Aspekt befinden sich auch Obergrenzen für die Wandstärke von 0,35 x D für D <= 6mm und von 0,4 x D-0,30mm für D > 6mm, insbesondere von 0,333 x D für D <= 6mm und von 0,4 x D-0,40mm für D > 6mm, bevorzugt von 0,316 x D für D <= 6mm und von 0,4 x D-0,50mm für D > 6mm, besonders bevorzugt von 0,3 x D für D <= 6mm und von 0,4 x D-0,60mm für D > 6mm noch in einem Bereich, in dem die erfindungsgemäße Kühlkanalgeometrie Vorteile bringt.

An dieser Stelle sei erwähnt, dass die Mindestwandstärken zwischen Kühlkanal und Bohreraußenumfang, bzw. Spanfläche oder Spanfreifläche selbstverständlich unterschiedlich gewählt werden kann. Unter Festigkeitsgesichtspunkten kommt es dabei besonders auf den Mindestabstand bzw. die Mindestwandstärke zwischen Kühlkanal und Spanfläche an, die somit gegenüber der Mindestwandstärke zwischen Kühlkanal und Spanfreifläche größer gewählt, werden kann. Auch gegenüber der Mindestwandstärke zwischen Kühlkanal und Bohreraußenumfang kann die Mindestwandstärke zwischen Kühlkanal und Spanfläche mit größeren Werten vorgesehen werden, um der höheren Festigkeitsanforderung Rechnung zu tragen. Andererseits kann es beispielsweise unter dem obenstehenden, in der Praxis relevanten Fertigungsaspekt der Rohlinge gleichen Durchmessers für Werkzeuge unterschiedlichen Durchmessers zu einer Mindestwandstärke zwischen Kühlkanal und Bohreraußenumfang kommen, die größer ist als diejenige zwischen Kühlkanal und Spanfläche.

Mit dem vorteilhaften Kühlkanalprofil nach Anspruch 15 und den Mindestwandstärken nach Anspruch 23 gelingt es somit, den vorhandenen Bauraum auf dem oder den Stegen eines rotierenden Zerspanungswerkzeugs so zu nutzen, dass sowohl Kühlmitteldurchsatz als auch Festigkeitswerte optimal sind.

Bohrer mit dem verrundeten Kühlkanalprofil können dabei sowohl im Lastfall von angreifenden Druckkräften und Drehmomenten, wie sie beim Bohren typisch sind, als auch bei Querkraft- bzw. Biegemomentenbelastung, wie sie beim Eintritt in das zu zerspanende Werkstück auftreten, hohe Lastwerte zerstörungsfrei über lange Standzeiten ertragen. gleichartige Querkraft- und Biegebeanspruchungen treten auch bei Gleich- oder Gegenlauffräsern auf. Andererseits wird der erzielte Kühlmitteldurchsatz hinsichtlich Menge und Druckabfall über die Werkzeuglänge hohen Ansprüchen gerecht.

Aufgrund der geringen Kerbspannungen bei der verrundeten Kühlkanalgeometrie ist es somit einerseits möglich, die Mindestwanddicke zwischen Kühlkanal und Spanfläche geringer zu dimensionieren, wodurch sich der Kühlkanalquerschnitt und damit der Durchsatz entsprechend vergrößert.

Zu einem erhöhten Kühlmitteldurchsatz bei verringertem Druckabfall trägt dabei der Effekt bei, dass sich aufgrund der großen Radien ein günstiger hydraulischer Radius, d.h. eine bezogen auf die einhüllende Mantelfläche des Kühlkanals große Querschnittsfläche des Kühlkanals ergibt. Die durchschnittliche Strömungsgeschwindigkeit, die wesentlich von der Rohrreibungskraft und der durch den Druckabfall verursachten' Gegenkraft abhängt ist also gegenüber den herkömmlichen Trigon-Profilen höher, so dass bei gleicher Querschnittsfläche ein höherer Durchsatz erzielt wird.

Die verrundete Kühlkanalgeometrie eignet sich somit besonders für Werkzeuge bei denen der Konflikt zwischen ausreichender Kühlmittelzufuhr einerseits und ausreichender Festigkeit andererseits besonders problematisch ist, in der Regel also bei Werkzeugen mit kleinen Durchmessern und/oder großer Werkzeuglänge.

Vorteilhaft liegen dabei die beiden Krümmungsmaxima des Kühlkanalquerschnitts auf derselben Radialkoordinate, wobei diese Radialkoordinate größer oder gleich der Radialkoordinate des vom Kühlkanalquerschnitt eingeschlossenen Kreises ist. Im sinne einer optimalen Raumausnutzung ist der Kühlkanalquerschnitt zu einer radial zur Bohrerachse verlaufenden Achse symmetrisch, so dass der angelegte Radius an den beiden Krümmungsmaxima gleich ist. Diese Weiterbildungen tragen der im Wesentlichen symmetrischen Form der Werkzeugstege und damit des unter. Einhaltung der Mindestwanddicken zur Verfügung stehenden Bauraums für den Kühlkanalquerschnitt auf dem Steg Rechnung. Daneben wäre aber auch - insbesondere wenn die Stegaufweitung in Radialrichtung auf Seiten der Hauptschneide schneller erfolgt als auf der dem Stegrücken zugewandten Seite - eine unsymmetrische Form der Kühlkanalquerschnitte denkbar, um den zur Verfügung stehenden Bauraum optimal zu Nutzen. Auch unter dem Aspekt, dass die höchste Belastung auf der der Hauptschneide zugewandten Seite des Kühlkanals auftritt, während auf der dem Stegrücken zugewandten Seite relativ dazu niedrigeren Belastungen standgehalten werden muss, können unsymmetrische Bauformen in Betracht gezogen werden.

Als besonders vorteilhaft im Sinne einer gleichzeitig hohen Kühlmittelzufuhr und ausreichenden Festigkeit des Werkzeugs hat sich die elliptische Kühlkanalform erwiesen. Bevorzugte Werte für das Verhältnis Ellipsen-Hauptachse/ - Nebenachse sind dabei 1,18 bis 1,65, besonders bevorzugt 1,25 bis 1,43, beispielsweise 1,43. Als Ellipse im Sinne der Erfindung gilt dabei nicht nur eine mathematisch exakte Ellipse (x²/a² + y²/b² = 1), sondern auch eine fertigungstechnische, d.h. angenäherte Ellipse.

Bei elliptischen Kühlkanalquerschnitten kann dabei der Kühlkanal aufgrund der niedrigen Kerbspannungen am Krümmungsmaxima mit einer kleineren Mindestwanddicke zwischen Kühlkanal und Hauptschneide dimensioniert werden als bei Bauformen, bei denen die Krümmungsmaxima radial weiter nach außen versezt sind, da dort engere Radien vorliegen als bei der elliptischen Bauform.

Neben der elliptischen Kühlkanalform bestehen aber auch weitere, insbesondere in fertigungtechnischer Hinsicht vorteilhafte Werkzeug-Bauformen, bei denen die Kühlkanalkontur keine Ellipse beschreibt.

Eine Kühlkanalgeometrie, bei der die Krümmungsmaxima gegenüber dem Mittelpunkt des eingeschlossenene Kreises nach außen versetzt sind ist unter dem Aspekt einer leichteren Beherrschbarkeit des Fertiguingsprozesses der beim erfindungsgemäßen Strangpressverfahren eingesetzten Stifte vorteilhaft, welche die Wendelhelix der Innenkühlkanäle vorgeben. Denn die beim Strangpressen zum Herstellen der Kühlkanäle eingesetzten gewendelte Stifte, die an einem Dorn vor einer Strangpressdüse angeordnet sind und so in die anströmende Masse die Kühlkanäle einformen, sind in elliptischer Form relativ aufwendig herzustellen, während die Herstellung von gewendelten Stifte mit nach außen versetzten Krümmungsmaxima aufgrund der an der Innenseite der Drähte relativ großen Konturabschnitte, die zur passgenauen Anlage an einer Ziehform zur Verfügung stehen, vergleichsweise einfach ist.

In dieser Hinsicht besonders vorteilhaft ist es, wenn die Strangpressgrünlinge mit einer radial Kühlkanalkontur ausgeformt sind, die gemäß Anspruch 11 geradlinige Schenkel-Abschnitte aufweist, an denen sich die Drähte beim Wendeln sicher in der Ziehform abstützen können.

Aus Versuchen und Simulationen wurde dabei deutlich, dass sich auch mit derartigen Kühlkanalquerschnitten ähnlich gute Resultate hinsichtlich Kerbspannung und Kühlmitteldurchsatz erreichen lassen wie mit ellipsenartigen Kühlkanalquerschnitten, solange genügend große Mindestradien und -wanddicken eingehalten werden. Aufgrund kleinerer Radien an den Krümmungsmaxima als bei der elliptischer Form sind die Mindestwanddicken allerdings größer.

Die erfindungsgemäßen Sinterrohlinge eignen sich aber nicht nur zur Herstellung von vollständigen Werkzeugen, sondern auch zur Herstellung von Werkzeugbauteilen gemäß Anspruch 24. So werden beispielsweise Tieflochbohrer oft aus einem lokal auf die Bohrerspitze begrenzten Bohrkopf und einem sich über die Länge des Bohrers erstreckenden Schaft zusammengelötet. Dabei kann die zumindest eine Bohrerschneide direkt am Bohrkopf ausgebildet sein oder ein Bohrkopf mit angeschraubten Wechsel- oder Wendeschneidplatten zum Einsatz kommen. An Bohrkopf und Schaft werden dabei recht unterschiedliche Anforderungen gestellt. Während beim Bohrkopf besonders Verschleißfestigkeit und Härte im Vordergrund stehen, muss der Schaft eine hohe Zähigkeit und Verwindungssteifigkeit aufweisen.

Erfindungsgemäß lassen sich aus den Sinterrohlingen mit der Geometrie gemäß den Ansprüchen 4 bis 18 auch derartige Werkzeugbauteile, wie Schafte, Bohrköpfe etc. fertigen, und zwar in der Ausgestaltung nach Anspruch 25 mit einer Spannut oder in der Ausgestaltung nach Anspruch 26 mit mehreren Spannuten.

Unter Stabilitätsgesichtspunkten ist man in der Werkzeugfertigung jedoch bemüht, insbesondere bei Tieflochbohrern, die aufgrund ihrer großen Länge im Verhältnis zum Durchmesser hohe Belastungen ertragen müssen, möglichst wenige fehleranfällige und festigkeitsabsenkende Lötstellen zu haben. Dieser Anforderung wird mit der vorteilhaften Weiterbildung des erfindungsgemäßen Zerspanungswerkzeugs gemäß Anspruch 18 Rechnung getragen.

Die Merkmale der Ansprüche lassen sich, soweit es sinnvoll erscheint, beliebig kombinieren.

Im übrigen kann das erfindungsgemäße Werkzeug bzw. Werkzeugbauteil mit üblichen Beschichtungen ausgestattet sein, und zwar zumindest im Bereich der scharfen Schneiden. Wenn es sich um eine Hartstoffschicht handelt, ist diese vorzugsweise dünn ausgeführt, wobei die Dicke der Schicht vorzugsweise im Bereich zwischen 0,5 und 3 µm liegt.

Die Hartstoffschicht besteht beispielsweise aus Diamant, vorzugsweise monokristallinem Diamant. Sie kann aber auch als Titan-Nitrid- oder als Titan-AluminiumNitrid-Schicht ausgeführt sein, da derartige Schichten ausreichend dünn abgeschieden werden. Aber auch andere Hartstoffschichten, beispielsweise TiC, Ti(C,N), Keramik, z.B. Al₂O₃, NbC, HfN, Ti(C,O,N), Mehrlagenbeschichtungen aus TiC/Ti(C,N)/TiN, mehrlagige Keramikbeschichtungen, insbesondere mit Zwischenlagen aus TiN oder Ti(C,N), etc. sind denkbar.

Alternativ dazu ist es denkbar, mit den Sinterrohlingen gemäß der Erfindung Werkzeuge oder Werkzeugbauteile zu schaffen, die zur Aufnahme von anzuschraubenden oder anzulötenden Wende- oder Wechselschneidplatten bestimmt sind.

Zusätzlich oder alternativ kann auch eine Weichstoffschicht Anwendung finden, die zumindest im Bereich der Nuten vorliegt. Diese Weichstoffbeschichtung besteht vorzugsweise aus MoS₂,

Nachfolgend werden anhand schematischer Zeichnungen bevorzugte Ausführungsformen der Erfindung näher erläutert. Es zeigen:
Fig. 1 zeigt einen bekannten Strangpresskopf gemäß dem eigenen Patent DE 42 42 336;
Fig. 2 zeigt einen Strangpresskopf gemäß einer Ausführungsform der Erfindung zur Durchführung des erfindungsgemäßen Strangpressverfahrens;
Fig. 3 zeigt eine Seitenansicht eines Sinterrohlings gemäß einer Ausführungsform der Erfindung;
Fig. 4 zeigt eine isometrische Ansicht einer Ausführungsform eines erfindungsgemäßen Werkzeugs mit zwei Stegen;
Fig. 5 zeigt eine isometrische Ansicht einer weiteren Ausführungsform eines erfindungsgemäßen Werkzeugs mit zwei Stegen;
Fig. 6 zeigt mögliche Querschnittsgeometrien eines Werkzeugs in einer Ausführungsform mit zwei Stegen;
Fig. 7 zeigt weitere mögliche Querschnittsgeometrien eines Werkzeugs in einer Ausführungsform mit zwei Stegen;
Fig. 8 zeigt weitere mögliche Querschnittsgeometrien eines Werkzeugs in einer Ausführungsform mit zwei Stegen;
Fig. 9 zeigt eine isometrische Ansicht einer Ausführungsform eines erfindungsgemäßen Werkzeugs mit einem Steg;
Fig. 10 zeigt eine isometrische Ansicht einer weiteren Ausführungsform eines erfindungsgemäßen Werkzeugs mit einem Steg;
Fig. 11 zeigt eine isometrische Ansicht einer weiteren Ausführungsform eines erfindungsgemäßen Werkzeugs mit einem Steg;
Fig. 12 zeigt eine schematisierte Querschnittsansicht einer weiteren Ausführungsform eines erfindungsgemäßen Werkzeugs mit einem Steg;
Fig. 13 zeigt eine schematisierte Querschnittsansicht einer weiteren Ausführungsform eines erfindungsgemäßen Werkzeugs mit einem Steg;

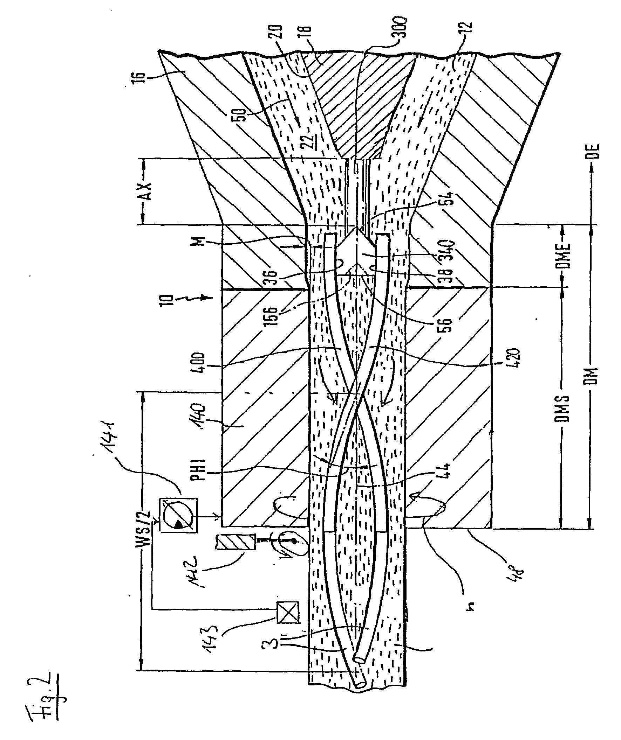

Zunächst soll unter Bezugnahme auf Fig. 1 das aus eigenen Patenten, z.B. DE 42 42 336 bekannte Strangpressverfahren und der dafür vorgesehene Strangpresskopf näher erläutert werden, dem dann das erfindungsgemäße Verfahren anhand der in Fig. 2 dargestellten Ausführungsform des Strangpresskopfs gegenübergestellt wird.

In Fig. 1 ist mit dem Bezugszeichen 10 ein Strangpresskopf bezeichnet, das von rechts nach links von einer hochviskosen, plastifizierten metallischen oder keramischen Masse 12 durchströmt wird. Mit 14 ist ein Düsenmundstück bezeichnet, das einstückig mit einem Düsenträgerteil 16 ausgebildet ist. Die Strangpressdüse hat zwei Abschnitte, nämlich einen Düsenmund DM und einen Düsen-Einlaufbereich DE, in dem die plastische Masse 12 trichterförmig in den Düsenmund geleitet wird. Im Zentrum des Düseneinlaufbereichs DE ist ein Düsendorn 18 vorgesehen, der an seiner stromabwärtigen Seite eine konische Oberfläche 20 hat, so dass zwischen dem Düsendorn 18 und dem Düsenträgerteil 16 ein Ringraum 22 gebildet wird, der in den Düsenmund DM mündet.

Das Strangpresswerkzeug bzw. der Strangpresskopf 10 bzw. die Strangpressdüse 14, 16 dient zur kontinuierlichen Extrusion von zylindrischen stabförmigen Formkörpern 24 mit zumindest einem, innenliegenden und wendelförmig, links- oder längsgängig verlaufenden Kanal 3.

Beim bekannten Strangpresswerkzeug 10 gemäß Fig. 1 ist im Zentrum des Düsendorns 18 eine Welle 30 drehbar gelagert. Die Welle 30 erstreckt sich über das vordere Ende 32 des Düsendorns 18 hinaus bis in den Düsenmund DM hinein und trägt am stromabwärtigen Ende einen plattenförmigen Nabenkörper 34, der über seine radial außenliegenden Seitenflächen 36, 38 fest mit wendelförmig vorverdrillten Stiften 40, 42 verbunden ist. Zwei solcher Stifte 40, 42 liegen dabei punktsymmetrisch zur Achse 44 der Welle 30 und damit des Nabenkörpers 34.

Die Stifte 40, 42 haben dabei im Wesentlichen die Länge einer halben Wendelsteigung WS/2 und die Anordnung ist derart getroffen, dass sich die Stifte 40, 42 zumindest bis zur Stirnseite 48 des Düsenmundstücks 14 erstrecken, so dass die von den Stäben 40, 42 beim Extrusionsvorgang gebildeten Innenkanäle 3 außerhalb der Düse ihre Form und Lage beibehalten.

Der Nabenkörper 34 sitzt im Düsenmund DM, so dass er einen vorbestimmten Axialabstand AX vom vorderen Ende 32 des Düsendorns 18 hat. Dieser Axialabstand AX ist vorzugsweise einstellbar, um die Anströmverhältnisse des Düsenmundes DM und damit des zumindest einen Stiftes 40, 42 beeinflussen zu können.

Wie durch die Pfeile 50 in Fig. 1 angedeutet, werden die Stifte 40, 42 definiert, und im Bereich des Düsenmundes DM axial angeströmt. Die Strömung trifft damit unter dem durch die Steigung WS und den Teilkreisdurchmesser bestimmten Winkel PHI auf die Stifte 40, 42. Da diese über den Nabenkörper 34 und die Welle 30 um die Achse 44 drehbar im Düsenmund DM fixiert sind, werden die Stifte 40, 42 beim Durchtritt der plastischen Masse 12 durch den Düsenmund in eine kontinuierliche, der Steigung der Wendel der vorgeformten Stifte entsprechende Drehbewegung mit der Winkelgeschwindigkeit OMEGA versetzt. Die durch die Anstellung der wendelförmigen Stifte zur Strömungsrichtung hervorgerufenen, in Umfangsrichtung wirkenden Kraftkomponenten summieren sich über die Länge der Stifte 40, 42 auf.

Die Anordnung aus drehbarer Welle 30, Nabenkörper 34 und zumindest einem wendelförmig verdrilltem Stift 40, 42 führt eine durch die Strömungsgeschwindigkeit vorgegebene gleichmäßigen Rotationsbewegung der Stifte 40, 42, wobei die Biegebeanspruchung der Stifte 40, 42 verhältnismäßig klein gehalten wird. Die Stifte 40, 42 fungieren auf diese Weise nach dem Prinzip einer axial durchströmten Turbine mit der Abtriebswelle 30, wobei allerdings das Medium nicht von einer idealen, inkompressiblen Flüssigkeit, sondern von einer hochviskosen und zu einem gewissen Grade elastischen Masse gebildet ist.

Der Düsenmund ist grundsätzlich in zwei Bereiche, nämlich einen Düsenmund-Eintrittsbereich DME und einen reinen Düsenmund-Strömungsbereich DMS unterteilt. Im Abschnitt DMS hat der Düsenmund einen vorbestimmten, im Wesentlichen gleichbleibenden Querschnitt, so dass in erster Näherung eine konstante Strömungsgeschwindigkeit in diesem Bereich angenommen werden kann. Im Bereich DME kommt es darauf an, den effektiv zur Verfügung gestellten Durchströmungsquerschnitt zumindest über die axiale Länge des Bereichs DME, vorzugsweise jedoch über die gesamte axiale Länge des Düsenmundes DM im Wesentlichen konstant zu halten. Zu diesem Zweck ist der Durchmesser im Bereich DME im Vergleich zum Abschnitt DMS gerade um ein Maß M angehoben, dass die von den beiden Durchmessern der Bereiche DMS und DME definierte Ringfläche in etwa so groß wird wie die Querschnittsflächen der Welle 30 und der Radialschnittfläche des Nabenkörpers 34 unter Einbeziehung der Verbindungsstellen 52. Durch geeignete Gestaltung der Übergänge zwischen den Innenmantelflächen im Bereich DME. und DMS können übermäßige Druckschwankungen in der Masse 12 beim Durchströmen des Düsenmundes DM ausgeschaltet werden. Durch die Gestaltung des Düsenmundes DM gerade im Übergangsbereich zwischen den Abschnitten DME und DMS wird ein zu starker Druckabfall verhindert, so dass mit Sicherheit dafür gesorgt wird, dass im Abschnitt DMS ein ausreichender Druck zum Schließen des Querschnitts vorherrscht.

In der Figur 1 sind einige mögliche Gestaltungen der stromauf und/oder stromabwärts liegenden Kanten 54 bzw. 56 des Nabenkörpers 34 angedeutet. Mit strichpunktierten Linien ist eine alternative Gestaltung einer Kante 156 auf der stromab gelegenen Seite angedeutet. Mit solchen Gestaltungen lassen sich die Strömungsverhältnisse beliebig beeinflussen.

Bei der axialen Anströmung des Nabenkörpers 34 und der Stifte 40, 42 entstehen auch in axialer Richtung wirkende Reaktionskräfte, die von der Welle 30 aufgenommen werden müssen. Zu diesem Zweck ist der Welle 30 nicht nur radial, sondern auch axial gelagert.

Die vorstehend beschriebene, bekannte Strangpressvorrichtung funktioniert wie folgt:

Die hochviskose Masse 12 tritt aus dem Ringraum 22 über eine kurze Einlaufstrecke über die axiale Distanz AX in den Einlaufbereich des Düsenmundstücks DME in axialer Richtung ein und versetzt den aus den Stäben bzw. Drähten 40, dem Nabenkörper 34 bzw. 134 bzw. 234 sowie der Welle 30 bestehenden Kühlkanalformer aufgrund des Anströmwinkels PHI in eine kontinuierliche, der Steigung WS der Stiftwendel entsprechende Drehbewegung. Die Lage der Wendel im Düsenmund DM und die Steigung der Wendel WS entspricht exakt der Lage und der Steigung der Wendel des in den Rohling eingeformten Kühlkanals. Es erfolgt dementsprechend bei der Durchströmung des Düsenmundes DM keine plastische Verformung der durchtretenden Masse, sondern vielmehr die Ausbildung der innenliegenden, wendelförmigen Kühlkanäle in einem Urformprozess. Die Stäbe 40, 42 werden dabei hauptsächlich auf Zug beansprucht. Gleiches gilt für die Beanspruchung der Welle 30, die somit mit einem verhältnismäßig kleinen Durchmesser ausgebildet werden kann.

In Fig. 2 sind Teile, soweit sie in Form und Funktion mit den in der Fig. 1 dargestellten übereinstimmen mit gleichen Bezugszeichen bezeichnet wie in Fig. 1. Im folgenden wird nur auf den von Fig. 1 abweichenden Aufbau und Funktion der in Fig. 2 gezeigten, erfindungsgemäßen Ausführungsform eingegangen, da für den restlichen Aufbau das obenstehend Gesagte gilt.

In der in Fig. 2 gezeigten Ausführungsform der Erfindung ist ein Düsenmundstück 140 auswechselbar und drehbar über ein nichtbezeichnetes, nach außen abdichtendes Gleitlager am Düsenträgerteil 16 abgestützt. Das Düsenmundstück 140 erstreckt sich über die Länge des Düsenmund-Strömungsbereichs DMS des Düsenmunds DM und wird dabei von einem Motor 141 kontinuierlich angetrieben. Mit 300 ist ein Bolzen bezeichnet, der lage- und drehfest im Düsendorn 18 gehalten ist, beispielsweise it dem Düsendorm 18 verschraubt ist oder an den Düsendorn 18 angelötet oder angeschweißt. Mit 340 ist ein feststehendes Verbindungselement bezeichnet, über das die beiden gewendelten Stifte 400, 420 mit dem Bolzen 300 und somit mit dem Düsendorn 18 verbunden sind.

Die Anordnung aus drehfestem Bolzen 300, Verbindungselement 340 und Stiften 40, 42 bleibt starr und prägt der anströmenden Masse eine radial zur Durchtrittsrichtung verlaufende Kraftkomponente auf. Das Verbindungselement 340 kann zu diesem Zweck eine turbinenleitschaufelartige Ausgestaltung aufweisen. Die daraus resultierende Tendenz der Masse 12 zu einer wendelförmigen Strömungsbewegung wird durch die Drehbewegung mit der Drehzahl n des vom Motor 141 angetriebenen Düsenmundstücks 140 verstärkt. Die Antriebsgeschwindigkeit des Motors 141 ist dabei so auf die Strömungsgeschwindigkeit der Masse 12 abgestimmt, dass die Masse 12 insgesamt eine wendelförmige Strömung ausführt, bei der die Bewegungsrichtung der Masseteilchen auf radialer Höhe der Stifte 400, 420 dem wendelförmigen Verlauf der Stifte 400, 420 entspricht. Eine Beaufschlagung der Stifte und damit des Verbindungsteils 340, Bolzens 300 und Düsendorns 18, die zu einem Geradebiegen der Stifte oder Bruch an der Lötstelle zwischen Verbindungselement 340 und den Stiften 400, 420 bzw. dem Bolzen 300 führen könnte, wird somit weitestgehend eliminiert.

Da ein Verbiegen der Stifte 400, 420 somit ausgeschlossen ist, weisen die Stifte 400, 420 wie schon beim obenstehend beschriebenen Strangpresskopf der Fig. 1 exakt die Steigung auf, die die Kanäle im fertigen Strangpressgrünling haben sollen. Dabei werden etwaige Ungleichmäßigkeiten der Strömung, beispielsweise aufgrund von Charge zu Charge schwankender Dichte in der Masse 12 o.ä. erfasst und führen zu einer Nachregelung der Drehzahl n des Düsenmundstücks 140.

Die Nachregelung erfolgt unter Zuhilfenahme einer der Düse nachgeordneten Steigungskennzeichnung mittels eines durch ein mitlaufendes Rad 142 in den ausgepressten Strangpressgrünling eingeprägten Indexierstreifens, der dem Grünling an jeder Stelle als ein ablesbares Maß der momentanen Steigung der Kanäle 3 eingeprägt wird. Eine Bilderfassung 143 kann dieses Maß erfassen und die Drehzahl n im Sinne einer konstanten Steigung der Kanäle 3 entsprechend nachregeln, indem der Motor 141 entsprechend angesteuert wird. Alternativ dazu wäre auch die Ansteuerung eines zwischen Motor 141 und Düsenmundstück 140 geschalteten Getriebes denkbar.

Der Düsenmund DM ist dabei mit einer glatten Innenoberfläche ausgebildet, und zwar auch im Bereich des Düsenmundstück-Einlaufs DME. Die wendelförmige Strömung bildet sich dann allein aufgrund der durch Wandreibung induzierten, von der Viskosität der Masse abhängenden Schubspannung aus und wird nicht durch eine feststehende Verdralleinrichtung oder mitlaufende, in der Masse rührende Wülste von außen aufgezwungen. Eine entgegen der Steigungsrichtung der wendelförmigen Kanäle verlaufende Entspannungsbewegung der Masse nach Austritt aus der Düse kann daher vermieden werden, so dass die eingebrachten Kanäle ihre Steigung mit hoher Konstanz halten. Für den Fall, dass stärkere Rotationskräfte auf die durchströmende Masse 12 aufgebracht werden müssen, könnte aber auch eine Oberflächentextur oder kleinere Mitnehmervorsprünge am Inneumfang des Düsenmundstücks 140 vorgesehen sein.

Bei der gezeigten Ausführungsform erstreckt sich der drehende Bereich der Düse 10 über den Düsenmund-Strömungsbereich DMS des Düsenmunds DM, wobei im Düsenmund-Einlaufbereich DME eine Durchmesseraufweitung M entsprechend des dort angeordneten Verbindungselements 340 und Bolzens 300 vorgesehen ist. Es wäre jedoch ebenfalls denkbar, die Düse 10 schon im Bereich DME drehbar zu gestalten. Andererseits ist es ebenfalls möglich, nur einen bestimmten Abschnitt des Düsenmundstücks 140 drehbar zu gestalten oder auch noch einen über die Länge der Stifte 400, 420 hinausgehenden Abschnitt mitzudrehen.

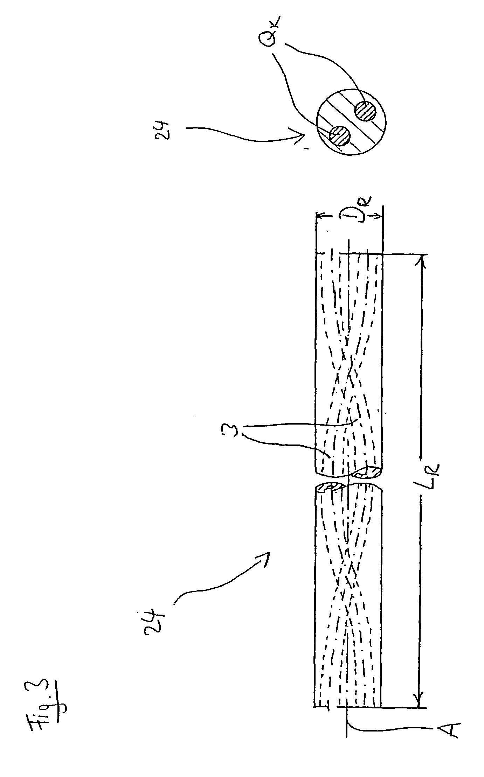

Die Steigung der wendelförmig vorverdrillten Stifte 400, 420 entspricht der Steigung der Kanäle 3 des in Fig. 3 gezeigten, extrudierten Rohlings 24. Das Maß der Steigung WS muss dabei unter Berücksichtigung der zu erwartenden Sinterschrumpfung festgelegt werden, ebenso wie der Teilkreisdurchmesser, auf dem die Kanäle 3 zu liegen kommen.

Die Wendelachse A (Fig. 3) fällt mit der Achse 44 des Bolzens 300 zusammen, so dass - um einen exakt dem Querschnitt der Stifte 400, 420 folgenden Querschnitt der Kanäle 3 zu bewirken - die Stifte 400, 420 exakt ausgerichtet an den Seitenflächen 36, 38 des Verbindungselements 340 befestigt werden müssen, was vorzugsweise über eine Schweiß- oder Lötverbindung geschieht. Als Material für die Stifte 400, 420 wird ein Werkstoff mit großem E-Modul, wie z. B. Stahl, Hartmetall oder ein Keramikwerkstoff verwendet.

In der gezeigten Ausführungsform sind dabei zwei Stifte 400, 420 vorgesehen. Es soll jedoch an dieser Stelle hervorgehoben werden, dass die Erfindung nicht auf eine solche Anzahl und Anordnung der Stifte beschränkt ist. Es ist gleichermaßen möglich, entweder nur einen Stift, oder aber mehrere Stifte mit gleichmäßiger Umfangsverteilung oder aber mit ungleichmäßiger Umfangsverteilung am Bolzen 340 bzw. am Düsendorn zu befestigen, wobei auch die Einzelquerschnitte der Stifte voneinander abweichen können. Es ist gleichermaßen möglich, die Stifte auf unterschiedlichen Teilkreisen anzuordnen.

Ein erfindungsgemäßer Rohling ist in Fig. 3 dargestellt. Dabei eignet sich das erfindungsgemäße Verfahren insbesondere für kleine Rohlingdurchmesser D_{R} oder im Verhältnis zum Rohlingdurchmesser D_{R} große Kühlkanalquerschnitte Q_{K}. Dabei kann der zumindest eine Stift jede beliebige Querschnittsform aufweisen, wobei es bei Rohlingen für Werkzeugen mit zwei, drei oder mehreren relativ kleinflächigen Stegen sinnnvoll ist, für jeden vorgesehenen Steg jeweils einen Kühlkanal mit elliptischer, trigonischer o.ä. Querschnittskontur vorzusehen, bei Rohlingen für Werkzeuge mit einem relativ breiten Steg dagegen einen Kühlkanal mit nierenförmiger Kontur oder mehrere Kühlkanäle mit kreisförmiger, elliptischer oder trigonischer Kontur.

Mit dem erfindungsgemäßen Verfahren können dabei Rohlinge stranggepresst werden, deren Durchmesser D_{R} (Fig. 3) schon im Wesentlichen dem Enddurchmesser des zu fertigenden Werkzeug entspricht. Denn aufgrund der glatten Wand des Düsenmundstücks 140 muss der nach Strangpressen und Fertigsintern erhaltene vollzylindrische Rohling nur noch fertigpoliert und mit Spannuten versehen werden. Ein weiterer Materialabtrag ist dagegen nicht nötig.

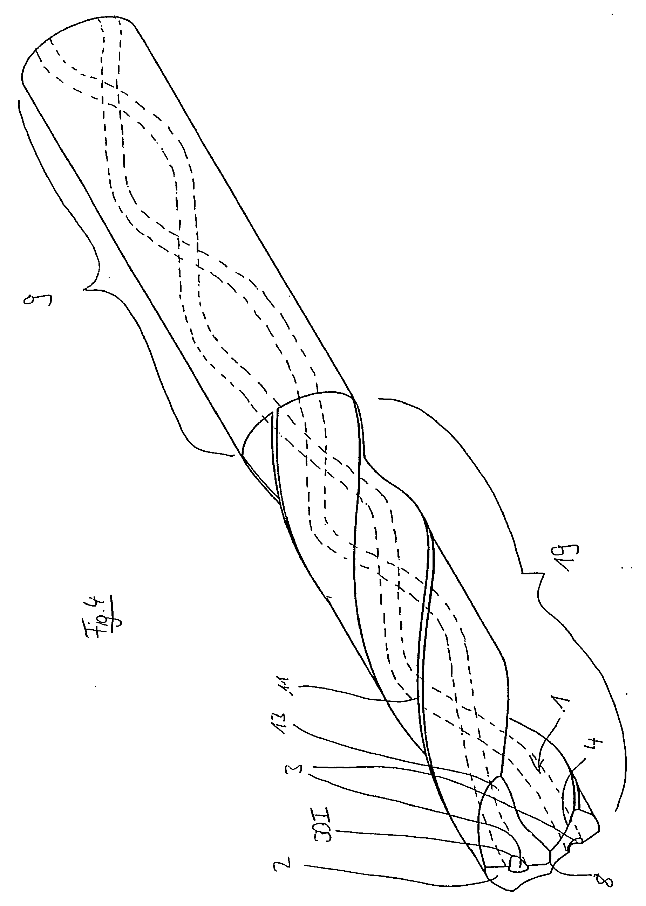

Die Figuren 4 bis 12 zeigen vergrößerte Ansichten verschiedene Ausführungsformen erfindungsgemäßer Bohrwerkzeuge mit Nenndurchmesser 4 mm aus einem Hartmetall auf Wolfram-Carbid-Basis.

Fig. 4 zeigt eine isometrisch vergrößerte Ansicht eines gewendelten Bohrwerkzeugs mit Durchmesser 4mm gemäß einer Ausführungsform der Erfindung. Das Werkzeug weist dabei an seinen durch die Spannuten 1 voneinander getrennten beiden Stegen 2 jeweils eine Hauptschneide 4 auf. Die Spannuten 1 und Stege 2 verlaufen unter einem Spiralwinkel von ca. 30° gewendelt bis zu einem als Vollzylinder ausgeführten Bohrerschaft 9, an dem das Werkzeug in eine Werkzeugaufnahme bzw. in ein Spannfutter einspannbar ist. Die Innenkühlkanäle 3 erstrecken sich durch das gesamte Werkzeug hindurch und sind mit dem gleichen Spiralwinkel verdrallt wie die Spannuten 1 und Stege 2. Beim dargestellten Werkzeug wird dabei das Kühlmittel zu einem, großen Teil direkt in die Spannut 1 eingebracht, da sich die Austrittsfläche der Kühlkanäle 3 über beide Abschnitte der durch einen sogenannten Vier-Flächen-Anschliff geteilten Freifläche 13 erstreckt, so dass ein Großteil des Kühlmittels direkt in die Spannut 1 strömt. Um eine umlaufende Abstützung des Bohrers in der Bohrung zu ermöglichen weist der in Fig. 4 gezeigte Bohrer zudem eine am Schneideneck der Hauptschneide 4 einsetzende Abstützphase 11 auf. Die Austrittsöffnungen der Innenkühlkanäle lassen eine trigonförmige Kühlkanal-Querschnittskontur 30I erkennen, die im Vergleich zu einer kreisförmigen Kühlkanalkontur bei gleichem Mindestwandabstand zur Spannut 1 einen erhöhten Kühlmittelausstoß erlaubt.

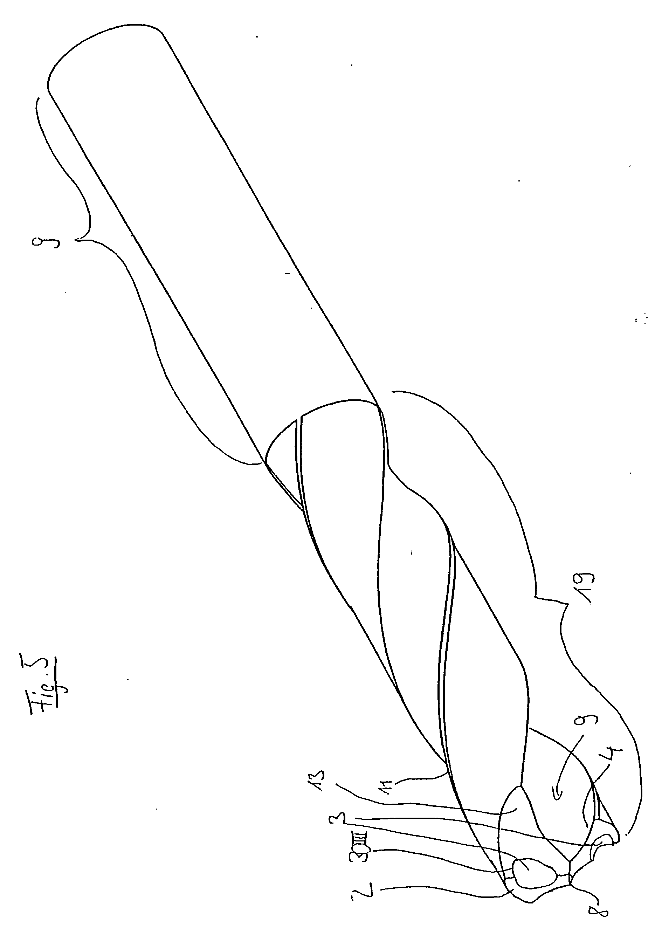

In Fig. 5 ist eine weitere Ausführungsform eines erfindungsgemäßen Bohrers gezeigt, der dem in Fig. 4 gezeigten Bohrer bis auf die geänderte Kühlkanalkontur entspricht. Der Vergleich der Kühlkanalkontur 30III aus Fig. 5 mit der Kühlkanalkontur 301 aus Fig. 4 macht sofort anschaulich, welches Potential an Kühlmitteldurchsatz durch eine Vergrößerung des Querschnitts der Kühlkanäle 3 erzielt werden kann. Zur weiteren Verbesserung der Spanabfuhr-Strömung wäre es dabei auch denkbar, die Spannuten 1 derart zu gestalten, dass sie sich ausgehend von der Bohrerspitze zum Bohrerschaft hin aufweiten.

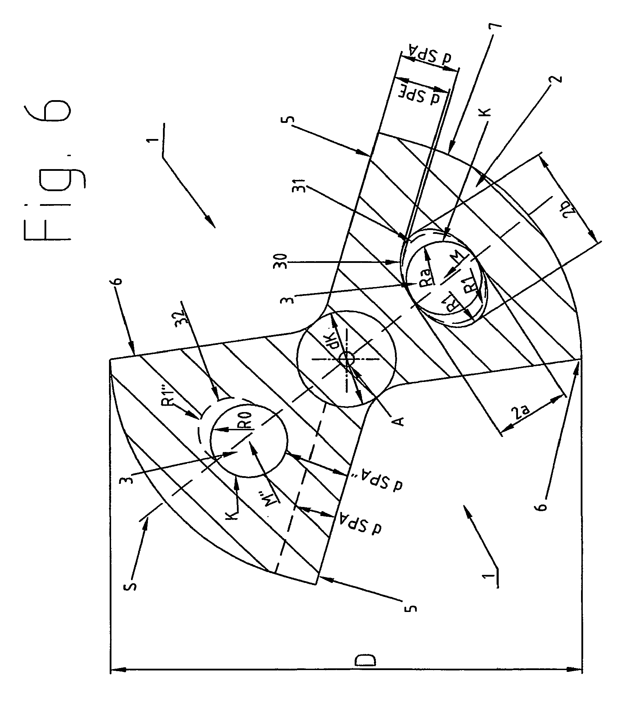

Abgesehen von einer Vergrößerung der Gesamtquerschnittsfläche der Kühlkanäle kann aber auch eine geschickte Wahl der Querschnittskontur zu einer Durchsatzoptimierung führen, wie an den in den Fig. 6, 7 und 8 beipielhaft dargestellten Kühlkanalquerschnitten gezeigt wird:

Es wird jetzt bezug genommen auf Fig. 6, der eine vergrößerte Querschnittsansicht eines zweischneidigen, Bohrers, Nenndurchmesser 4mm, mit zwei Stegen 2 und zwei Spannuten 1 zu entnehmen ist. An der schneidenden Seite sind die Stege 2 jeweils durch eine Spanfläche 5 begrenzt, an der nichtschüeidenden Seite durch eine Spanfreifläche 6. Dem Außenumfang des Bohrers ist dabei das Bezugszeichen 7 zugeordnet.

Ausgehend von einem Bohrerkern mit Durchmesser d_{K} spreizen Spanfläche 5 und Spanfreifläche 6 die Stege 2 auf eine solche Stegbreite auf, dass der Nenndurchmesser D des Bohrers erreicht wird.

Die Stege 2 sind in etwa symmetrisch zu einer Stegmittellinie S, die radial zur Bohrerachse A eingezeichnet ist. Auf der Symmetrielinie S befinden sich auf dem unteren Steg 2 der Mittelpunkt M eines Kreises K, der sich vollständig innerhalb der Querschnittsfläche der dortigen Kühlkanalbohrung 3 befindet. Auf dem oberen Steg befindet sich der Mittelpunkt M" des dortigen Kreises K mit gleichem Durchmesser 2R₀ etwas von der Spanfläche weg nach hinten versetzt vollständig innerhalb der Querschnittsfläche der dortigen Kühlkanalbohrung 3.

Dabei werden mehrere den jeweiligen Kühlkanal umgebende Kühlkanalkonturen 30, 31, 32 gemäß unterschiedlicher Ausführungsformen der Erfindung miteinander verglichen: Am unteren Steg ist eine elliptischer Kontur 30 für den Kühlkanal 3 mit durchgezogener Linie eingezeichnet, eine weitere Kontur 31 für den Kühlkanal 3 mit gestrichelter Linie. Am oberen Steg ist eine Kontur 32 für den Kühlkanal 3 mit gestrichelter Linie eingezeichnet.

Die Kühlkanalkonturen 30, 31 weisen dabei eine zur Symmetrielinie symmetrische Form auf, während die Kühlkanal 32 nur auf der nichtschneidenden Seite von der durch den berührend eingeschlossenen Kreis K vorgegebenen Kontur abweicht. An den Krümmungsmaxima liegen dabei jeweils die Krümmungsradien R₁, R₁' und R₁" an, wobei die Konturen 30, 31 jeweils zwei gleich stark geschwungene Krümmungsmaxima aufweisen, während an der Kontur 32 nur ein Krümmungsmaximum mit Radius R₁" vorhanden ist.

Man erkennt, dass mit der erfindungsgemäßen Kühlkanalquerschnittsgeometrie unter Einhaltung des gleichen Abstands zum Kerndurchmesser d_{K}, den Kühlkanalbohrungen mit einem kreisrunden Durchmesser 2R₀ hätten, ein wesentlicher Zuwachs an Durchtrittsfläche in den der Spanfläche bzw. der Spanfreifläche zugewandten Bereichen des Kühlkanals erzielt werden kann.

Dabei wird die Durchtrittsflächengewinnung nur durch die einzuhaltenden Mindestwanddicken begrenzt, wobei hier der Übersichtlichkeit halber nur die für die Bruchfestigkeit des Bohrers besonders wichtige Mindestwanddicke D_{SPE}, d_{SPA} und d_{SPA}" zwischen Kühlkanal 3 und Spanfläche 5 für jede der Kühlkanalkonturen 30, 31, 32 eingezeichnet ist.

Die Mindestwanddicken sind wiederum durch die Mindestfestigkeit, die der Bohrer erreichen soll, vorgegeben und damit auch durch die Radien R₁, bzw. R₁' oder R₁" an den Krümmungsmaxima der jeweiligen Kühlkanalkontur 30, 31, 32. Dies spiegelt sich darin wieder, dass für die elliptische Kühlkanalkontur 30 eine kleinere Mindestwanddicke D_{SPE} als für die Kühlkanalkonturen 31, 32 mit nach außen versetzten Krümmungsmaxima (Mindestwanddicke D_{SPA}) angesetzt werden kann.

Dabei halten die Kühlkanalkonturen 30, 31 die Mindestwanddicke D_{SPE} bzw. D_{SPA} zwischen Kühlkanal 3 und Spanfläche 5 ein, die im Wesentlichen der (nicht benannten) Mindestwandicke zwischen Kühlkanal 3 und Spanfreifläche 5. entspricht. Dagegen weist die Kontur 32 beispielhaft auf der der Spanfläche 5 zugewandten Seite eine größere Mindestwanddicke d_{SPA}" auf als auf der der Spanfläche 5 abgewandten Seite. Denn einerseits ist der Mittelpunkt M' des eingeschlossenen Kreises von der Schneidseite weg versetzt, andererseits weist die Kühlkanalkontur 32 nur auf der der Spanfreifläche 6 zugewandten Seite ein Krümmungsmaximum (Radius R₁") auf. Es wären aber auch Kühlkanalquerschnitte denkbar, bei denen das Krümmungsmaximum auf der der Spanfläche zugewandten Seite liegt.

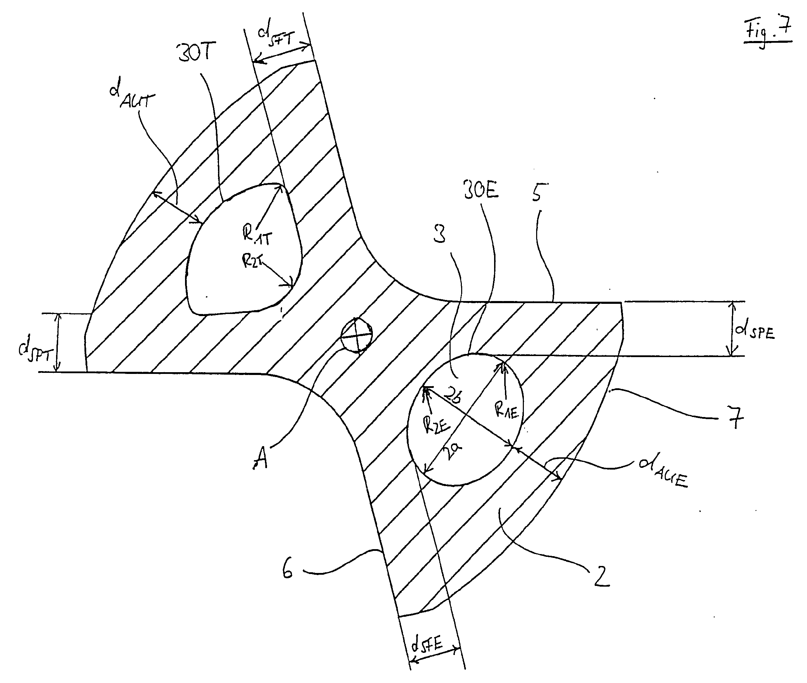

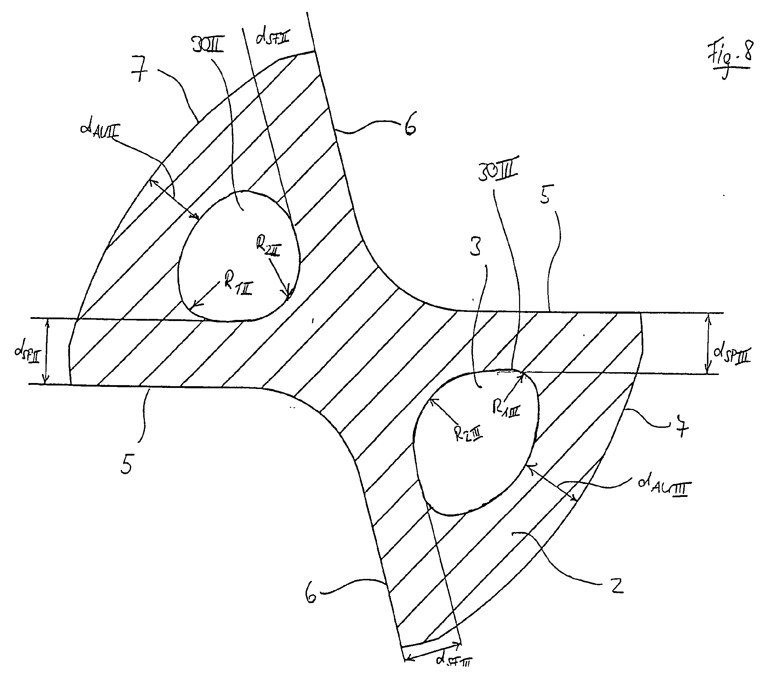

Fig. 7 zeigt eine Querschnitt durch einen zweischneidigen Bohrer, wobei auf dem oberen Steg ein KÜhlkanal 3 mit Kühlkanal-Trigonprofil 30T einem elliptischen Kühlkanalprofil 30E auf dem unteren Steg gegenübergestellt wird.

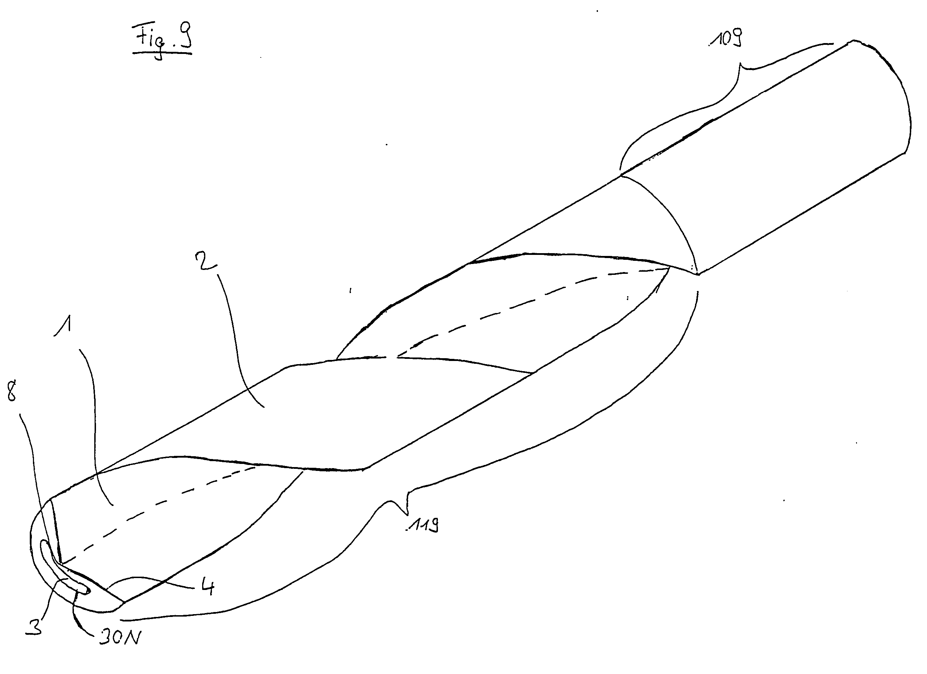

Fig. 8 zeigt ebenfalls eine Querschnitt durch einen zweischneidigen Bohrer, wobei zwei weitere Kühlkanalprofile 30II, 30 III gezeigt werden.

Mit d_{SPX}, d_{SFX} und d_{AUX} sind dabei jeweils die Mindestwanddicken zwischen Kühlkanal 3 und Spanfläche 5, Kühlkanal 3 und Spanfreifläche 6 sowie zwischen Kühlkanal 3 und Außenumfang 7 bezeichnet, mit R_{1X} und R_{2X} jeweils der kleinste und der größte an die Kühlkanalkontur anliegende Radius, wobei X für E, T, I, II, III steht.

Bei den in den Fig. 6 bis 7 gezeigten Querschnitten handelt es sich jeweils um vergrößerte Abbildungen eines Bohrers mit 4 mm Nenndurchmesser, wobei die Kühlkanalprofile jeweils den gleichen Kreis mit Radius R₀ einschreiben.

Die Kühlkanäle weisen dabei folgende Parameter auf:
- eingeschlossener Kreis mit R₀ = 0,4, Querschnittsfläche 0,50 mm²;
- Elliptisches Kühlkanalprofil 30E mit Hauptachse 2a = 0,55 mm, Nebenachse 2b = 0,4 mm, Querschnittsfläche 0,69 mm²;
- Annähernd elliptisches Kühlkanalprofil 30II mit engstem Radius R_{1II} = 0,3 mm, weitestem Radius R_{2II} = 0,5 mm, Querschnittsfläche 0,67 mm²;
- Annähernd elliptisches Kühlkanalprofil 30III mit engstem Radius R_{1III} = 0,2 mm, weitestem Radius R_{2III} = 0,5 mm, Querschnittsfläche 0,66 mm2 ;
- Trigonförmiges Kühlkanalprofil, engster Radius R_{1T} = 0,1 mm, weitester Radius R_{2T} = 0,4 mm, Querschnittsfläche 0.65 mm².

Man erkennt, dass die Querschnittsfläche des eringeschlossenen Kreises dabei deutlich geringer ist als die bei den weiteren Kühlkanälen, während die restlichen Kühlkanäle nahezu gleich große Querschnittsflächen aufweisen.

Versuche und Simulationen an den in Figs. 6 bis 8 dargestellten Bohrern zeigten zudem, dass durch größere Radienverrundung am Krümmungsmaxima eine Reduzierung der unter Druck- und Torsionsbelastung des Werkzeugs am Kühlkanal auftretenden Kerbspannungen erreicht werden kann. Beste Werte wurden beim elliptischen Profil 30E erzielt, während beim trigonförmigen Profil dramatisch höhere Spannungsspitzen in Kauf genommen werden mussten.

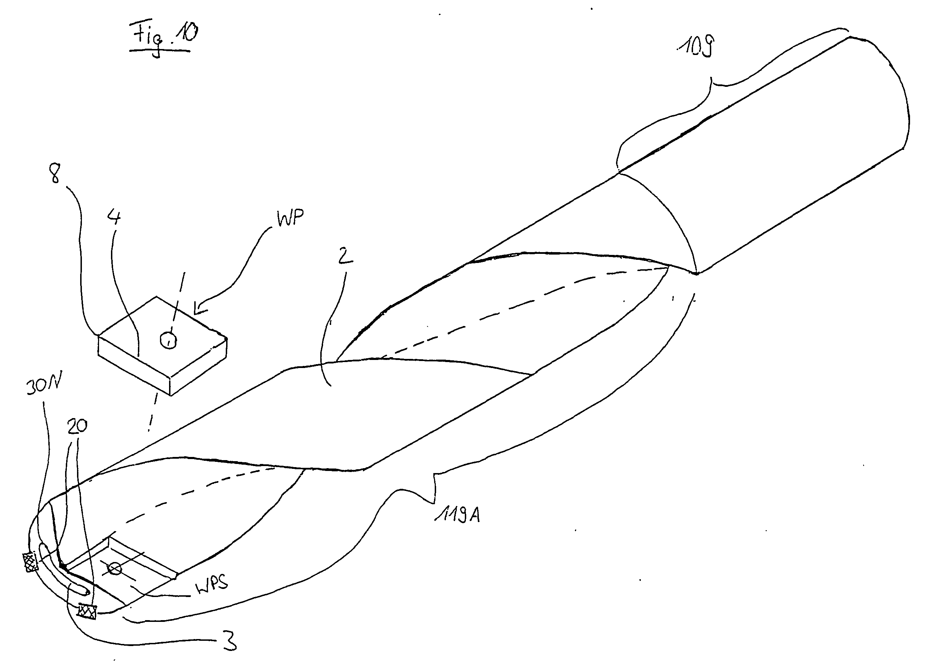

Die Fig. 9 bis 13 zeigen verschiedene Ausführungsformen eines erfindungsgemäßen Einlippen-Bohrwerkzeugs.

Das in Fig. 9 gezeigte, einstückige Bohrwerkzeug weist dabei eine mit 1 bezeichnete gewendelte Spannut und einen mit 2 bezeichneten gewendelten Steg auf, die sich von einer Bohrerspitze 8 durch ein Schneidteil 119 hindurch bis zu einem Bohrerschaft 109 erstrecken. Der Steg 2 weist eine Hauptschneide 4 auf, die sich vom Werkzeugumfang bis zur Werkzeugachse erstreckt, die an der Werkzeugspitze 8 mit der gestrichelt angedeuteten Wendelkurve der Spannut 1 zusammenfällt. Im Steg 2 ist ein Kühlkanal 3 eingeformt, dessen nierenförmige Querschnittskontur mit 30N bezeichnet ist und der sich gewendelt mit exakt der gleichen Steigung wie Spannut 1 und Steg 2 durch das gesamte Werkzeug erstreckt, um im Betrieb ein an der Stirnseite des Bohrerschafts 109 eingepresstes Kühlmittel direkt zum Spanungsbereich an der Werkzeugspitze 8 zu leiten. Die Nierenform wird dabei einerseits der Anforderung gerecht, die Stegfläche gut auszunutzen, so dass eine hohe Kühlmittelzufuhr gewährleistet werden kann. Andererseits sind die Radien an der Stelle kleinster Krümmung nicht höher als sie bei zwei kreisförmigen Kühlkanälen mit gleichen Mindestrandabständen wären, so dass unter Belastung erhöhte Spannungsspitzen vermieden werden können, während gleichzeitig ein erhöhter Kühlmitteldurchsatz erzielt wird, wobei sich das Kühlmittel nicht nur punktuell, sondern über die gesamte Spannutwand erstreckt. Es wird deutlich, dass sihc das gezeigte Bohrwerkzeug aufgrund seiner gewendelten Spannut 1 über seinen gesamten Umfang im Bohrloch abstützen kann, wodurch eine höhere Zentriergenauigkeit als bei einem klassisch geradegenuteten Einlippen-Bohrwerkzeug erreicht werden kann.

Die weiteren Figuren betreffen Abwandlungen des in Fig. 9 gezeigten Werkzeugs.

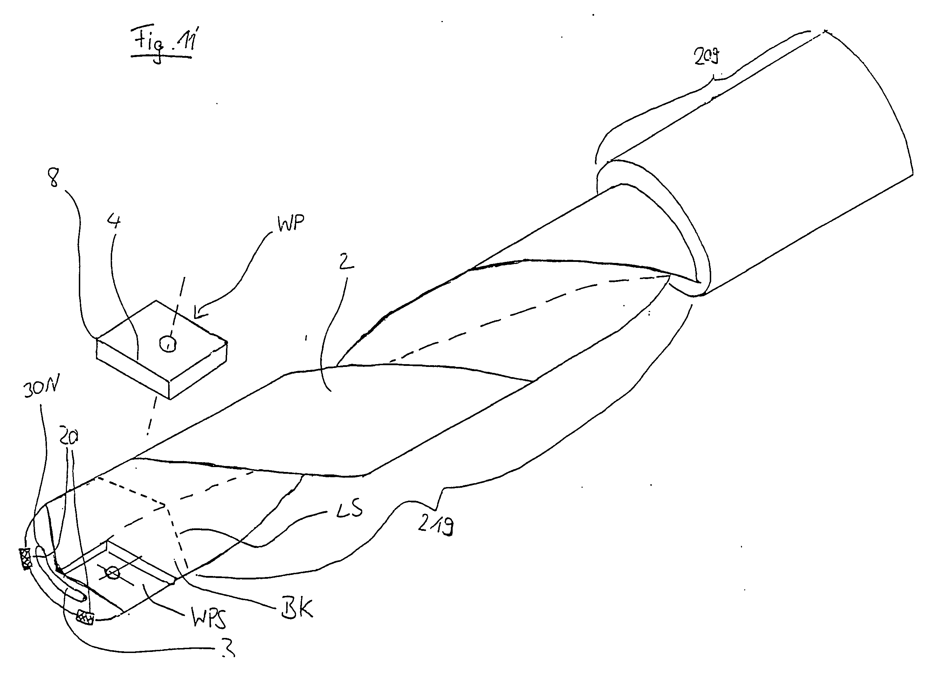

So weist das in Fig. 10 gezeigte Werkzeug anstatt einer fest am Steg vorgesehenen Schneide einen modifizierten Schneidteil 119A mit einem Sitz WPS für eine Schneidplatte aus. Eine entsprechende Wendeschneidplatte ist dabei mit WP bezeichnet. Die Hauptschneide 4 und die Bohrerspitze 8 sind an der Wendeschneidplatte WP vorgesehen. Umfangsseitig sind dabei am Werkzeugsteg 2 Führungsleisten 20 angebracht, mit denen sich das Werkzeug in der Bohrung abstützt. Es ist dabei darauf zu achten, dass der Kühlkanal 3, bzw. seine Querschnittskontur 30N so angeordnet sein muss, dass die erforderliche Mindestwandstärke zum Schneidplattensitz WPS und zum Sitz der Führungsleisten 20 eingehalten wird.

Die in Figs. 9 und 10 gezeigten Werkzeuge sind dabei aufgrund ihrer einstückigen Ausführung nicht durch Verbindsungsstellen einzelner Elemente geschwächt. Aus Kostengründen und um den verschiedenen Anforderungen an Bohrerspitze und über die Werkzeuglänge gerecht zu werden, werden Tiefbohrwerkzeug aber oft aus mehrteilig hergestellt, wobei für Bohrkopf und Bohrerschaft oft andere Materialien als für das restliche Schneidteil verwendet werden. Für den Bohrkopf eignet sich dabei beispielsweise ein extrem hartes Hartmetall, während es für das Schneidteil eher auf Zähigkeit ankommt, weshalb dort oft ein anderes Hartmetall eingesetzt wird.

Der Fig. 11 ist darüber hinaus ein Werkzeug zu entnehmen, dass aus mehreren Bauteilen besteht. Auf ein Schneidteil 219 ist dabei ein Bohrkopf BK gelötet, welcher den Schneidplattensitz WPS zur Aufnahme der Wendeschneidplatte WP aufweist. Mit gestrichelter Linie ist dabei die Lötstelle LS angedeutet. Der Schneidteil 219 ist wiederum in einem Einspannschaft 209 eingelötet. Der Kühlkanal 3 mit nierenförmiger Querschnittskontur 30N erstreckt sich dabei gewendelt durch Bohrkopf BK und Schneidteil 219 hindurch, wobei im Schaft 209 ein geradliniges Kühlkanalverbindungsstück zwischen Schneidteil 219 einerseits und maschinenseitiger Kühlmittelzufuhr andererseits vorgesehen sein kann.

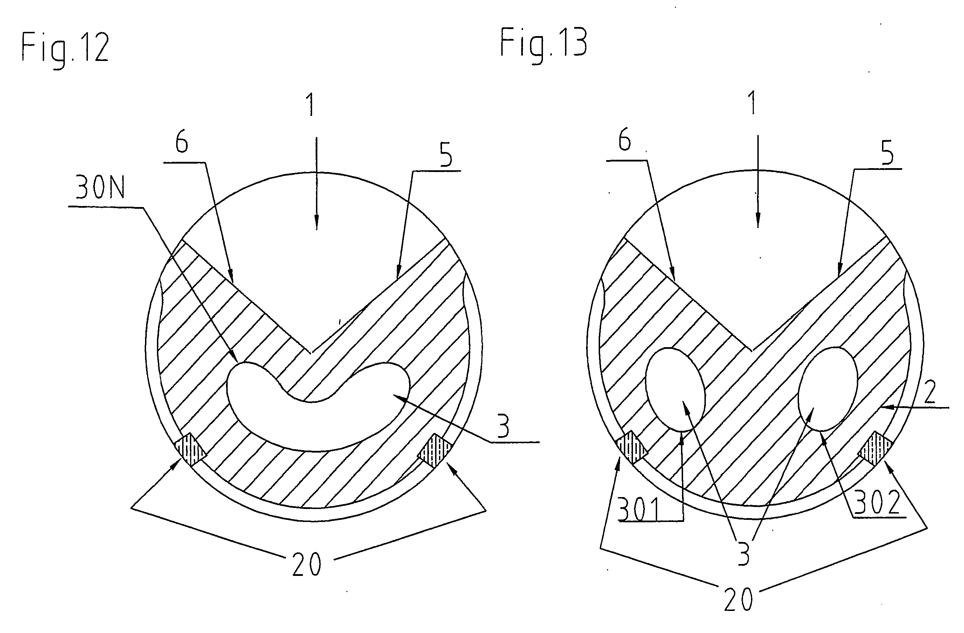

Schließlich zeigen die Figs. 12 und 13 noch Querschnittsansichten zweier einlippiger, erfindungsgemäßer Bohrer. Es ist dabei zu erkennen, dass die Spannut 1 in etwa ein Viertel des auf dem Bohrerdurchmesser zur Verfügung stehenden Raumes ausmacht, während der Steg 2 in etwa drei Viertel einnimmt. Der Kühlkanal 3 des in Fig. 12 gezeigten Werkzeugs weist dabei die schon obenstehend angesprochene nierenförmige Kontur 30N auf, während das in Fig. 13 gezeigte Bohrwerkzeug zwei Kühlkanäle 3 aufweist, die jeweils Freiformkonturen 301, 302 aufweisen, die in etwa einer verzerrten Ellipse entsprechen. Umfangsseitig sind jeweils zwei Führungsleisten gezeigt. Die Führungsleisten 20 sind also länger als die zugehörige Schneidplatte und folgen dem Werkzeugsteg wendelförmig. Auf diese Weise gelingt eine umfangsseitige Abstützung in der Bohrung, die sich umlaufend über eine bestimmten Umfangsbereich erstreckt.

Selbstverständlich sind dabei Abweichungen von den gezeigten Ausführungsformen möglich, ohne den Grundgedanken der Erfindung zu verlassen.

## Patentansprüche

1. Strangpressverfahren zur kontinuierlichen Herstellung von vollzylindrischen Sinterrohlingen (24) mit zumindest einem innenliegenden, wendelförmig verlaufenden Kanal (3) vorbestimmten Querschnitts, bei dem die den Rohling (24) bildende, plastische Masse (12) aus einem Düsenmund (DM) einer Strangpressdüse (10) in Form eines auslassseitig im Wesentlichen kreiszylindrischen, vorzugsweise innenseitig glatten Rohres heraus gepresst wird, wobei die Masse (12) entlang der Achse zumindest eines wendelförmig verdrillten, an einem Düsendorn (18) lagefest gehaltenen Stiftes (400, 420) strömt, der zumindest abschnittsweise in den Düsenmund (DM) hineinragt, und die Masse (12) im Wesentlichen drallfrei in den Düsenmund (DM) eintritt, **dadurch gekennzeichnet, dass**
- sich der Stift (400, 420) nicht dreht,
- die plastische Masse (12) im Düsenmund (DM) in eine der Wendelform des Stiftes (400, 420) entsprechende, verdrallte Strömung versetzt wird, und
- die Drehbewegung der plastischen Masse (12) durch einen am Außenumfang der Masse angreifenden, drehangetriebenen Abschnitt (140) des Düsenmunds (DM) derart unterstützt wird, dass der Stift (400, 420) im Wesentlichen keiner Biegeverformung unterliegt.

2. Strangpressverfahren nach Anspruch 1, **dadurch gekennzeichnet, dass** sich der drehangetriebene Abschnitt (140) des Düsenmunds (DM) zumindest abschnittsweise über den vom Stift (400, 420) durchdrungenen Abschnitt erstreckt.

3. Strangpressverfahren nach einem der vorhergehenden Ansprüche, **dadurch gekennzeichnet, dass** dem zumindest einen Stift (400, 420) ein die Reibungskraft der Masse (12) verminderndes Fluid zugeführt wird, insbesondere eine Flüssigkeit oder flüssigkeitsähnliche Substanz, vorzugsweise das Plastifizierungsmittel der Masse oder zumindest eine Komponente des Plastifizierungsmittels.

4. Vollzylindrischer Sinterrohling (24), herstellbar mit dem Verfahren nach einem der vorhergehenden Ansprüche, **gekennzeichnet durch** zumindest einen wendelförmig eingeformten Kanal (3), dessen Querschnittskontur (30; 31; 32; 30E; 30T; 301; 30II; 30III; 30N; 301, 302) senkrecht zur Längsachse (A) des Rohlings (24) von einer Kreiskontur (K) abweicht, wobei der Rohling (24) einen Durchmesser (D) kleiner 12 mm, insbesondere kleiner 8 mm, beispielsweise kleiner 4 mm aufweist.

5. Vollzylindrischer Sinterrohling (24), herstellbar mit dem Verfahren nach einem der vorhergehenden Ansprüche, **gekennzeichnet durch** zumindest einen wendelförmig eingeformten Kanal (3), wobei
die Querschnittsfläche des Kanals (Q_{K}) zur Querschnittsfläche des übrigen Materials (Q_{M}) in einer zur Zylinderachse senkrechten Ebene
bei Rohlingen mit einem Kanal im Verhältnis. 20 : 80 oder besser steht, insbesondere 30: 70, beispielsweise 50: 50,
bei Rohlingen mit mehr als einem Kanal im Verhältnis 20 : 80 oder besser, insbesondere 30: 70, beispielsweise 40 : 60.

6. Sinterrohling (24) mit den Merkmalen der Ansprüche 4 und 5.

7. Sinterrohling (24) nach einem der Ansprüche 4 bis 6, **gekennzeichnet durch** eine Abweichung der Wendelform von der Soll-Helix, die bei einer Rohlinglänge (L_{R}) von 100 mm an jeder Stelle höchstens 10' beträgt.

8. Sinterrohling (24) nach einem der Ansprüche 4 bis 7, **gekennzeichnet durch** eine Rohlinglänge (L_{R}) von über 300 mm, insbesondere über 400 mm, beispielsweise über 500 mm.

9. Sinterrohling (24) nach einem der Ansprüche 4 bis 8, **gekennzeichnet durch** ein Durchmesser-Längen-Verhältnis größer 1:5, insbesondere 1:10.

10. Sinterrohling (24) nach einem der Ansprüche 4 bis 9, **gekennzeichnet durch** einen Spiralwinkel über 10°.

11. Sinterrohling (24) nach einem der Ansprüche 4 bis 10, **dadurch gekennzeichnet, dass** die Querschnittskontur (30T; 30II; 30III) des Kanals (3) durch zwei sich von innen nach außen erstreckende Seitenabschnitte begrenzt wird, die zumindest abschnittsweise geradlinig verlaufen.

12. Sinterrohling (24) nach einem der Ansprüche 4 bis 11, **dadurch gekennzeichnet, dass** die Querschnittskontur (30; 31; 32) des Kanals (3) einen imaginären Kreis (K) mit einem Mittelpunkt (M) berührend einschließt und zumindest ein, vorzugsweise zwei Krümmungsmaxima aufweist, deren Abstand zur Längsachse (A) des Rohlings in Richtung einer Linie zwischen Mittelpunkt (M) und Längsachse (A) größer oder gleich dem Abstand des Mittelpunkts (M) zur Längsachse (A) ist.

13. Sinterrohling (24) nach Anspruch 12, **dadurch gekennzeichnet, dass** die beiden Krümmungsmaxima der Querschnittskontur (30; 31; 30E; 30T; 30I; 30II; 30III; 30N) des Kanals (3) gleiche Radialkoordinaten aufweisen.

14. Sinterrohling (24) nach einem der Ansprüche 4 bis 13, **dadurch gekennzeichnet, dass** die Querschnittsfläche (Q_{K}) des Kanals (3) zu einer radial verlaufenden Linie

15. Sinterrohling (24) nach einem der Ansprüche 11 bis 14, **dadurch gekennzeichnet, dass** der Radius (R₁, R₁', R₁", R_{1X}) an der stärksten Krümmung der Querschnittskontur (30; 31; 32; 30E; 30I; 30II; 30III; 30N; 301, 302) des Innenkühlkanals (3) dem 0,35- bis 0,9-fachen, insbesondere dem 0,5- bis 0,85-fachen, bevorzugt 0,6 bis 0,85-fachen und besonders bevorzugt dem 0,7 bis 0,8-fachen, beispielsweise dem 0,75-fachen des Radius des Kreises (R₀) entspricht.

16. Sinterrohling (24) nach einem der Ansprüche 4 bis 15, **gekennzeichnet durch** eine nierenförmige Querschnittskontur (30N) des Kanals (3).

17. Sinterrohling (24) nach einem der Ansprüche 4 bis 15, **gekennzeichnet durch** eine elliptische Querschnittskontur (30, 30I, 30E) des Kanals (3).

18. Sinterrohling (24) nach einem der Ansprüche 4 bis 15, **gekennzeichnet durch** eine trigonförmmige Querschnittskontur (30T) des Kanals (3).

19. Drehangetriebenes Zerspanungswerkzeug, insbesondere Bohrer, hergestellt aus einem Sinterrohling (24) gemäß einem der vorhergehenden Ansprüche, mit Schaft (9; 109; 209) und Schneidteil (19; 119; 119A, WP, 219, BK, WP), in dem zumindest eine gewendelte Spannut (1) eingearbeitet ist und in dessen Steg (2) zumindest ein gewendelter Innenkühlkanal (3) liegt, der sich von der Bohrerspitze (8) bis zu einer gegenüberliegenden Stirnseite des Schafts (9; 109; 209) erstreckt.

20. Zerspanungswerkzeug nach Anspruch 19, **gekennzeichnet durch** eine einstückige Ausgestaltung.

21. Zerspanungswerkzeug nach Anspruch 19 oder 20, **gekennzeichnet durch** die Ausgestaltung als Zwei- oder Mehrlippenwerkzeug.

22. Zerspanungswerkzeug nach Anspruch 19 oder 20, **gekennzeichnet durch** die Ausgestaltung als Einlippenwerkzeug.

23. Zerspanungswerkzeug nach einem der Ansprüche 19 bis 22, **gekennnzeichnet durch** Mindestwanddicken (d_{AUX}, d_{SPX}, D_{SFX}) zwischen Innenkühlkanal (3) und Bohreraußenumfang (7), zwischen Innenkühlkanal (3) und Spanfläche (5) und zwischen Innenkühlkanal (3) und Spanfreifläche (6), die in einem Bereich zwischen einer Untergrenze und einer Obergrenze liegen, wobei
die Untergrenze bei 0,08 x D für D <= 1mm und bei 0,08mm für D > 1mm liegt,
insbesondere bei 0,08 x D für D <= 2,5 mm und bei 0,2mm für D > 2,5 mm,
bevorzugt bei 0,08 x D für D <= 3,75mm und bei 0,3mm für D > 3,75mm,
beispielsweise bei 0,1 x D für D <= 3mm und bei 0,3mm für D > 3mm, und wobei
die Obergrenze bei 0,35 x D für D <= 6mm und bei 0,4 x D-0,30mm für D > 6mm liegt (W_{max,1}),
insbesondere bei 0,333 x D für D <= 6mm und bei 0,4 x D-0,40mm für D > 6mm (W_{max,2}),
bevorzugt bei 0,316 x D für D <= 6mm und bei 0,4 x D-0,50mm für D > 6mm (W_{max,3}),
besonders bevorzugt bei 0,3 x D für D <= 6mm und bei 0,4 x D-0,60mm für D > 6mm (W_{max,4}),
beispielsweise bei 0,2 x D (W_{max,5}) oder
0,15 x D für D<=4mm und bei 0,6mm für D>4mm (W_{max,6}).

24. Zylindrisches Bauteil (BK; 219; 209) eines mehrstückigen Zerspanungswerkzeugs nach einem der Ansprüche 19, 21 oder 22, beispielsweise eines Tieflochbohrers, insbesondere Schneidteil (219), Schneidenträger, Bohrkopf (BK) oder Bohrerschaft, in dem zumindest eine gewendelte Spannut (1) eingearbeitet ist und in dessen Steg (2) zumindest ein gewendelter Kühlkanal (3) liegt, der sich durch das gesamte Bauteil hindurch erstreckt, hergestellt aus einem Sinterrohling (24) gemäß einem der vorhergehenden Ansprüche.

25. Bauteil nach Anspruch 24, **gekennzeichnet durch** die Ausgestaltung mit mehr als einer Spannut.

26. Bauteil nach Anspruch 24, **gekennzeichnet durch** die Ausgestaltung mit einer Spannut.

## Claims

1. An extrusion process for the continuous production of full cylindrical sintered blanks (24) with at least one internal spirally running duct (3) of a predetermined cross-section, wherein the plastic compound (12) forming the blank (24) is pressed from a nozzle mouth (DM) of an extrusion nozzle (10) in the form of a tube that has essentially the shape of a circular cylinder on the outlet side, preferably smooth on the inside, wherein the compound (12) flows along the axis of at least one spirally twisted pin (400, 420) held in a fixed position on a nozzle spindle (18), which pin projects at least in sections into nozzle mouth (DM), and wherein the compound (12) enters essentially free from twisting in the nozzle mouth (DM), **characterised in that**
- the pin (400, 420) does not rotate,
- the plastic compound (12) in the nozzle mouth (DM) is displaced in a vortex flow corresponding to the spiral shape of the pin (400, 420), and
- the rotary movement of the plastic compound (12) is supported by a rotarily driven section (140) of the nozzle mouth (DM) bearing against the outer circumference of the compound in such a manner that the pin (400, 420) is subject to essentially no flexural deformation.

2. The extrusion process according to Claim 1, **characterised in that** the rotarily driven section (140) of the nozzle mouth (DM) extends at least in sections over the section penetrated by the pin (400 420).

3. The extrusion method according to one of the preceding claims, **characterised in that** a fluid reducing the frictional force of the compound (12) is supplied to at least one pin (400, 420), in particular a liquid or liquid-like substance, preferably the plasticising agent of the compound or at least one component of the plasticising agent.

4. A full cylindrical sintered blank (24), that can be produced by the method according to one of the preceding claims, **characterised by** at least one spirally shaped duct (3) whose cross-sectional contour (30; 31; 32; 30E; 30T; 30I; 30II; 30III; 30N; 301, 302) deviates perpendicularly to the longitudinal axis (A) of the blank (24) from a circular contour, wherein the blank (24) has a diameter (D) smaller than 12 mm, in particular smaller than 8 mm, for example smaller than 4 mm.

5. The full cylindrical sintered blank (24), that can be produced by the method according to one of the preceding claims, **characterised by** at least one spirally shaped duct (3), wherein
the cross-sectional area of the duct (Q_{K}) to the cross-sectional area of the remaining material (Q_{M}), in a plane perpendicular to the cylinder axis,
in the case of blanks with a duct lies in the ratio of 20:80 or better, in particular 30:70, for example 50:50,
in the case of blanks with more than one duct lies in the ratio of 20:80 or better, in particular 30:70, for example 40:60.

6. A sintered blank (24) with the features of Claims 4 and 5.

7. The sintered blank (24) according to one of Claims 4 to 6, **characterised by** a deviation of the coil shape from the theoretical helix, which, in the case of a blank length (L_{R}) of 100 mm, is a maximum of 10' at any point.

8. The sintered blank (24) according to one of Claims 4 to 7, **characterised by** a blank length (L_{R}) of over 300 mm, in particular over 400 mm, for example over 500 mm.

9. The sintered blank (24) according to one of Claims 4 to 8, **characterised by** a diameter-length ratio greater than 1:5, in particular 1:10.

10. The sintered blank (24) according to one of Claims 4 to 9, **characterised by** a spiral angle of over 10°.

11. The sintered blank (24) according to one of Claims 4 to 10, **characterised in that** the cross-sectional contour (30T; 30II; 30III) of the duct (3) is limited by two lateral sections extending from the inside to the outside, which sections run rectilinearly at least in sections.

12. The sintered blank (24) according to one of Claims 4 to 11, characteristic in that the cross-sectional contour (30; 31; 32) of the duct (3) encloses an imaginary circle (K) with a centre (M), so that there is contact, and has at least one, preferably two curvature maxima whose distance from the longitudinal axis (A) of the blank in the direction of a line between the centre (M) and the longitudinal axis (A) is longer than or equal to the distance from the centre (M) to the longitudinal axis (A).

13. The sintered blank (24) according to Claim 12, **characterised in that** the two curvature maxima of the cross-sectional contour (30; 31; 30E; 30T; 301; 30II; 30III; 30N) of the duct (3) have the same radial coordinates.

14. The sintered blank (24) according to one of Claims 4 to 13, **characterised in that** the cross-sectional area (Q_{K}) of the duct (3) is symmetrical to a line running radially.

15. The sintered blank (24) according to one of Claims 11 to 14, **characterised in that** the radius (R₁, R₁', R₁", R₁ₓ) on the steepest curvature of the cross-sectional contour (30; 31; 32; 30E; 30I; 30II; 30III; 30N; 301, 302) of the inner cooling duct (3) is equal to 0.35 to 0.9 times, in particular 0.5 to 0.85 times, preferably 0.6 to 0.85 times and in particular preference 0.7 to 0.8 times, for example 0.75 times the radius of the circle (R₀).

16. The sintered blank (24) according to one of Claims 4 to 15, **characterised by** a kidney-shaped cross-sectional contour (30N) of the duct (3).

17. The sintered blank (24) according to one of Claims 4 to 15, **characterised by** an elliptical cross-sectional contour (30, 30I, 30E) of the duct (3).

18. The sintered blank (24) according to one of Claims 4 to 15, **characterised by** a triangular cross-sectional contour (30T) of the duct (3).

19. A rotarily driven machining tool, in particular a drill, manufactured from a sintered blank (24) according to one of the preceding claims, with a shaft (9; 109; 209) and cutting part (19; 119; 119A, WP, 219, BK, WP), is incorporated in at least one coiled chip groove (1) and in whose bridge (2) there lies at least one coiled inner cooling duct (3) which extends from the drill bit (8) to an opposing end face of the shaft (9; 109; 209).

20. The machining tool according to Claim 19, **characterised by** an integral design.

21. The machining tool according to Claim 19 or 20, **characterised by** the design as a two- or multi-lip tool.

22. The machining tool according to Claim 19 or 20, **characterised by** the design as a single lip tool.

23. The machining tool according to one of Claims 19 to 22, **characterised by** minimum wall thicknesses (D_{AUX}, d_{SPX}, D_{SFX}) between the inner cooling duct (3) and the outer drill circumference (7), between the inner cooling duct (3) and the chip surface (5) and between the inner cooling duct (3) and the chip-free surface (6), which lie in a range between a lower limit and an upper limit, wherein
the lower limit is 0.08 x D for D <= 1 mm and 0.08 mm for D > 1 mm,
in particular, 0.08 x D for D <= 2.5 mm and 0.2 mm for D > 2.5 mm,
preferably 0.08 x D for D <= 3.75 mm and 0.3 mm for D > 3.75 mm,
for example 0.1 x D for D <= 3 mm and 0.3 mm for D > 3 mm, and wherein
the upper limit is 0.35 x D for D <= 6 mm and 0.4 x D-0.30 mm for D > 6 mm (W_{max,1}),
in particular, 0.333 x D for D <= 6 mm and 0.4 x D-0.40 mm for D > 6 mm (W_{max,2}),
preferably 0.316 x D for D <= 6 mm and 0.4 x D-0.50 mm for D > 6 mm (W_{max,3}),
in particular preference 0.3 x D for D <= 6 mm and 0.4 x D-0. 60 mm for D > 6 mm (W_{max,4}),
for example 0.2 x D (W_{max, 5} or 0.15 x D for D <= 4 mm and 0.6 mm for D>4 mm (W_{max,6}) .

24. A cylindrical component (BK; 219; 209) of a multi-part machining tool according to one of Claims 19, 21 or 22, for example a deep hole drill, in particular a cutting part (219), blade support, drill head (BK) or drill shaft, in which is incorporated at least one coiled chip groove (1), and in whose bridge (2) lies at least one coiled cooling duct (3) which extends through the entire component, manufactured from a sintered blank (24) according to one of the preceding claims.

25. The component according to Claim 24, **characterised by** the design with more than one chip groove.

26. The component according to Claim 24, **characterised by** the design with one chip groove.

## Revendications

1. Procédé de filage à la presse pour la fabrication continue d'ébauches frittées entièrement cylindriques (24), comprenant au moins un canal interne (3) s'étendant en forme de spirale à section transversale prédéfinie, dans lequel la masse plastique (12) constituant l'ébauche (24) est pressée hors d'une bouche de buse (DM) d'une buse de filage à la presse (10) sous forme d'un tube de préférence lisse à l'intérieur et sensiblement cylindrique côté sortie, dans lequel la masse (12) s'écoule le long de l'axe d'au moins une tige (400, 420) tordue en forme de spirale, maintenue à un emplacement fixe sur un mandrin de buse (18) et rentrant du moins par sections dans la bouche de buse (DM) et la masse (12) entre sensiblement sans torsion dans la bouche de buse (DM),
**caractérisé en ce que**
- la tige (400, 420) ne tourne pas,
- la masse plastique (12) dans la bouche de buse (DM) est transformée en un écoulement à torsion correspondant à la forme de spirale de la tige (400, 420),
- le mouvement de rotation de la masse plastique (12) est assisté par une section (140) entraînée en rotation et empiétant sur la circonférence extérieure de la masse de la bouche de buse (DM) de manière à ce que la tige (400, 420) ne subisse sensiblement pas de déformation par flexion.

2. Procédé de filage à la presse selon la revendication 1, **caractérisé en ce que** la section entraînée en rotation' (140) de la bouche de buse (DM) s'étend du moins par sections sur la section traversée par la tige (400, 420).

3. Procédé de filage à la presse selon une des revendications précédentes, **caractérisé en ce qu'**à l'au moins une tige (400, 420) est acheminé un fluide réduisant la force de frottement de la masse (12), notamment un liquide ou une substance similaire à un liquide, de préférence le moyen de plastification de la masse ou au moins un composant du moyen de plastification.

4. Ebauche frittée entièrement cylindrique (24), pouvant être fabriquée par le procédé selon une des revendications précédentes, **caractérisé par** au moins un canal creusé en forme de spirale (3) dont le contour de section transversale (30 ; 31 ; 32 ; 30E ; 30T ; 30I ; 30II ; 30III ; 30N ; 301 , 302) dévie d'un contour circulaire (K) perpendiculairement à l'axe longitudinal (A) de l'ébauche (24), l'ébauche (24) ayant un diamètre (D) inférieur à 12 mm, notamment inférieur à 8 mm, par exemple inférieur à 4 mm.

5. Ebauche frittée entièrement cylindrique (24), pouvant être fabriquée par le procédé selon une des revendications précédentes, **caractérisé par** au moins un canal creusé en forme de spirale (3), dans laquelle la surface de section transversale du canal (Q_{K}), par rapport à la surface de section transversale du reste de la matière (Q_{M}), dans un plan perpendiculaire à l'axe du cylindre, se situe,
pour les ébauches présentant un canal, dans un rapport de 20: 80 ou mieux, notamment 30: 70, par exemple 50: 50,
pour les ébauches présentant plus d'un canal, dans un rapport de 20: 80 ou mieux, notamment 30: 70, par exemple 40: 60.

6. Ebauche frittée (24) présentant les caractéristiques des revendications 4 et 5.

7. Ebauche frittée (24) selon une des revendications 4 à 6, **caractérisée par** une divergence de la forme en spirale par rapport à l'hélice théorique qui, pour une longueur d'ébauche (L_{R}) de 100 mm, est à tout point de 10' au maximum.

8. Ebauche frittée (24) selon une des revendications 4 à 7, **caractérisée par** une longueur d'ébauche (L_{R}) supérieure à 300 mm, notamment supérieure à 400 mm, par exemple supérieure à 500 mm.

9. Ebauche frittée (24) selon une des revendications 4 à 8, **caractérisée par** un rapport diamètre-longueur supérieur à 1 : 5, notamment 1 : 10.

10. Ebauche frittée (24) selon une des revendications 4 à 9, **caractérisée par** un angle de spirale supérieur à 10°.

11. Ebauche frittée (24) selon une des revendications 4 à 10, **caractérisée en ce que** le contour de section transversale (30T ; 30II; 30III) du canal (3) est limité par deux sections latérales s'étendant de l'intérieur vers l'extérieur et qui sont orientées du moins par sections en ligne droite.

12. Ebauche frittée (24) selon une des revendications 4 à 11, **caractérisée en ce que** le contour de section transversale (30T ; 31 ; 32) du canal (3) circonscrit par contact un cercle imaginaire (K) à point central (M) et comporte au moins un, de préférence deux maxima de courbure dont la distance par rapport à l'axe longitudinal (A) de l'ébauche, en direction d'une ligne allant du point central (M) à l'axe longitudinal (A), est supérieure ou égale à la distance entre le point central (M) et l'axe longitudinal (A).

13. Ebauche frittée (24) selon la revendication 12, **caractérisée en ce que** les deux maxima de courbure du contour de section transversale (30 ; 31 ; 30E ; 30T ; 301 ; 30II ; 30III ; 30N) du canal (3) ont les mêmes coordonnées radiales.

14. Ebauche frittée (24) selon une des revendications 4 à 13, **caractérisée en ce que** la surface de section transversale (Q_{K}) du canal est symétrique à une ligne s'étendant radialement.

15. Ebauche frittée (24) selon une des revendications 11 à 14, **caractérisée en ce que** le rayon (R₁, R₁', R₁", R_{1X}) équivaut, au niveau de la plus forte courbure du contour de section transversale (30 ; 31 ; 32 ; 30E ; 30I ; 30II ; 30III ; 30N ; 301, 302) du canal de refroidissement interne (3), à 0,35 à 0,9 fois, notamment 0,5 à 0,85 fois, de préférence 0,6 à 0,85 fois et de manière particulièrement préférentielle 0,7 à 0,8 fois, par exemple 0,75 fois le rayon du cercle (R₀).

16. Ebauche frittée (24) selon une des revendications 4 à 15, **caractérisée par** un contour de section transversale en forme de rein (30N) du canal (3).

17. Ebauche frittée (24) selon une des revendications 4 à 15, **caractérisée par** un contour de section transversale elliptique (30, 30I, 30E) du canal (3).

18. Ebauche frittée (24) selon une des revendications 4 à 15, **caractérisée par** un contour de section transversale en forme de trigone (30T) du canal (3).

19. Outil d'enlèvement de copeaux entraîné en rotation, notamment foret, fabriqué à partir d'une ébauche frittée (24) selon une des revendications précédentes, comportant une tige (9 ; 109 ; 209) et une pièce de coupe (19 ; 119 ; 119A , WP, 219, BK, WP) dans laquelle est creusée au moins une gorge de serrage en spirale (1) et dans la traverse de laquelle (2) se trouve au moins un canal de refroidissement interne en spirale (3) qui s'étend depuis la pointe du foret (8) jusqu'à une face frontale opposée de la tige (9; 109 ; 209).

20. Outil d'enlèvement de copeaux selon la revendication 19, **caractérisé par** une conformation en une pièce.

21. Outil d'enlèvement de copeaux selon la revendication 19 ou 20, **caractérisé par** une conformation sous forme d'outil à deux lèvres ou plus.

22. Outil d'enlèvement de copeaux selon la revendication 19 ou 20, **caractérisé par** une conformation sous forme d'outil à une lèvre.

23. Outil d'enlèvement de copeaux selon une des revendications 19 à 22, **caractérisé par** des épaisseurs de paroi minimales (D_{AUX}, d_{SPX}, d_{SFX}) entre le canal de refroidissement interne (3) et le diamètre extérieur du foret (7), entre le canal de refroidissement interne (3) et la surface d'attaque (5) et entre le canal de refroidissement interne (3) et la surface libre d'attaque (6), qui se situent dans une zone située entre une limite inférieure et une limite supérieure,
la limite inférieure se situant à 0,08 x D pour D ≤ 1 mm et à 0,08 mm pour D > 1 mm,
notamment à 0,08 x D pour D ≤ 2,5 mm et à 0,2 mm pour D > 2,5 mm,
de préférence à 0,08 x D pour D ≤ 3,75 mm et à 0,3 mm pour D > 3,75 mm,
par exemple à 0,1 x D pour D ≤ 3 mm et à 0,3 mm pour D > 3 mm, et
la limite supérieure se situant à 0,35 x D pour D ≤ 6 mm et à 0,4 x D-0,30 mm pour D > 6 mm (W_{max,1}),
notamment à 0,333 x D pour D ≤ 6 mm et à 0,4 x D-0,40 mm pour D > 6 mm (W_{max,2}),
de préférence à 0,316 x D pour D ≤ 6 mm et à 0,4 x D-0,50 mm pour D > 6 mm (W_{max,3}),
de manière particulièrement préférentielle à 0,3 x D pour D ≤ 6 mm et à 0,4 x D-0,60 mm pour D > 6 mm (W_{max,4}),
par exemple à 0,2 X D(W_{max,5}) ou
0, 15 X D pour D ≤ 4 mm et à 0, 6 mm pour D > 4 mm (W_{max,6}).

24. Composante cylindrique (BK; 219, 209) d'un outil d'enlèvement de copeaux en plusieurs pièces selon une des revendications 19, 21 ou 22, par exemple d'un foret pour trous profonds, notamment une pièce de coupe (219), un porte-lame, une tête d'alésage (BK) ou une tige de forage, dans laquelle est creusée au moins une gorge de serrage en spirale (1) et dans la traverse (2) de laquelle se trouve au moins un canal de refroidissement en spirale (3) qui s'étend à travers toute la composante, fabriquée à partir d'une ébauche frittée (24) selon une des revendications précédentes.

25. Composante selon la revendication 24, **caractérisée par** une conformation avec plus d'une gorge de serrage.

26. Composante selon la revendication 24, **caractérisée par** une conformation avec une gorge de serrage.
